# EUROPÄISCHE PATENTANMELDUNG

(11) **EP 4 376 289 A1**
(43) Veröffentlichungstag der Anmeldung: **29.05.2024**
(21) Anmeldenummer: 23204310.9
(22) Anmeldetag: 18.10.2023
(51) Int. Cl.: H02P 29/02, H02P 9/04, H02J 9/04, H02P 27/04

(54) **ANTRIEBSEINHEIT FÜR EINEN LÜFTER MIT EINER DREHZAHLCODIERUNG BASIEREND AUF EINER SELEKTIVEN ENERGIEÜBERTRAGUNG ÜBER ZWEI GETRENNTE ELEKTRISCHE ANSCHLUSSLEITUNGSSYSTEME**

(30) Priorität: 22.11.2022 DE 102022130919
(71) Anmelder: ZITT Motoren AG, 8143 Stallikon (CH)
(72) Erfinder: Hüsser, Daniel, 8055 Zürich (CH); Hunziker, Urs, 8706 Meilen (CH)
(74) Vertreter: Dilg, Haeusler, Schindelmann Patentanwaltsgesellschaft mbH

(57) **Zusammenfassung**

Beschrieben wird eine Antriebseinheit (100) für einen Lüfter (190), welche aufweist (a) einen Synchronmotor (110) mit einer Antriebswelle (112); (b) ein motorseitiges Antriebsrad (120), welches mit der Antriebswelle gekoppelt ist und konfiguriert ist, über ein mechanisches Koppelelement (180) den Lüfter anzutreiben; (c) einen Frequenzumrichter (130) zum Versorgen des Synchronmotors mit einer Wechselspannung; (d) eine elektrische Schaltung (150) mit (d1) einem ersten Leistungseingang (11, 12, 13) zum Empfangen von Leistung über einen ersten Strompfad (SP1), (d2) einem zweiten Leistungseingang (21, 22, 23) zum Empfangen von Leistung über einen zweiten Strompfad (SP2), (d3) einem Leistungsausgang (31, 32, 33) zum Ausgeben von Leistung an einen Leistungseingang (51, 52, 53) des Frequenzumrichters und (d4) einen Drehzahl-Steuerausgang (41, 42) zum Ausgeben eines Drehzahl-Steuersignals an einen Steuereingang (71, 72) des Frequenzumrichters. Die elektrische Schaltung ist konfiguriert (i) bei einem Empfang von Leistung über den ersten Strompfad ein erstes Drehzahl-Steuersignal auszugeben, so dass der Synchronmotor mit einer ersten Drehzahl betrieben wird, und (ii) bei einem Empfang von Leistung über den zweiten Strompfad ein zweites Drehzahl-Steuersignal auszugeben, so dass der Synchronmotor mit einer zweiten Drehzahl betrieben wird. Ferner wird beschrieben eine Lüftungsanlage mit einer solchen Antriebseinheit sowie ein Verfahren zum Modernisieren einer Lüftungsanlage.

## Beschreibung

### Technisches Gebiet

Die vorliegende Erfindung betrifft allgemein die Heizungs- und Lüftungstechnik von Gebäuden. Die vorliegende Erfindung betrifft insbesondere eine Antriebseinheit für einen Lüfter einer stationären Lüftungsanlage für ein Gebäude. Die vorliegende Erfindung betrifft ferner eine stationäre Lüftungsanlage sowie ein Verfahren zum Modernisieren einer stationären Lüftungsanlage.

### Hintergrund der Erfindung

Zum Belüften von Räumen eines Gebäudes werden stationäre Lüftungsanlagen verwendet, welche zumindest einen Lüfter aufweisen, welcher Luft entlang einer vorgegebenen Richtung, bevorzugt innerhalb eines Strömungskanals, bewegt bzw. fördert. Dazu weist der Lüfter typischerweise ein Flügelrad auf, welches von einer Antriebsvorrichtung angetrieben wird, welche einen geeigneten Elektromotor aufweist, der über einen Riemen das Flügelrad antreibt. Abhängig von dem erforderlichen Volumenstrom muss der Motor eine ausreichend große Leistung haben. Für einen Lüfter mit einem hohen Volumenstrom werden leistungsstarken Elektromotoren verwendet, die beispielsweise einen Durchmesser in der Größenordnung von einem Meter haben können.

Aus der WO 2015/071213 A1 ist eine Antriebsvorrichtung für einen Lüfter einer Lüftungsanlage bekannt. Die bekannte Antriebsvorrichtung weist auf (a) einen permanent erregten Synchronmotor, der von einem Wechselstromnetz mit elektrischer Energie versorgt wird, und (b) einen Frequenzumrichter, welcher elektrisch zwischen dem Wechselstromnetz und dem Synchronmotor geschaltet ist und welcher den Synchronmotor mit einer Wechselspannung mit einer Frequenz ansteuert, welche die Netzfrequenz des Wechselstromnetzes übersteigt. Die Antriebsvorrichtung weist ferner auf (c) ein Untersetzungsgetriebe, welches mechanisch zwischen dem Synchronmotor und einem Flügelrad des Lüfters geschaltet ist. Die Verwendung des mechanischen Untersetzungsgetriebes erlaubt es, den Synchronmotor von dem Frequenzumrichter elektrisch mit einer erhöhten Wechselstrom-Frequenz anzusteuern, so dass sich der Synchronmotor schneller dreht und dadurch mit einem erhöhten Wirkungsgrad betrieben wird.

Frequenzumrichter umfassen in bekannter Weise eine eingangsseitige Brückenschaltung bestehend aus mehreren eingangsseitigen Halbleiter-Schaltelementen, welche eine über einen Eingang des Frequenzumrichters zugeführte Netz-Wechselspannung in eine Gleichspannung umwandeln. Die Gleichspannung wird über einen sog. Zwischenkreis-Kondensator geglättet. Außerdem wird in dem Zwischenkreis-Kondensator eine von der Kapazität des Zwischenkreis-Kondensators und von der Höhe der Gleichspannung des Zwischenkreises abhängige Energie gespeichert. Die geglättete Gleichspannung wird dann von einer ausgangsseitigen Brückenschaltung bestehend aus mehreren ausgangsseitigen Halbleiter-Schaltelementen in eine Wechselspannung mit der gewünschten Zielfrequenz umgewandelt. Durch eine gezielte Ansteuerung insbesondere der ausgangsseitigen Halbleiter-Schaltelemente über ein Steuersignal, welches dem Frequenzumrichter über einen Steuereingang zugeführt wird, kann die Zielfrequenz innerhalb eines vergleichsweise großen Frequenzbereiches eingestellt werden.

Bei älteren Lüftungsanlagen werden die Lüfter häufig von bekannten Antriebsvorrichtungen angetrieben, welche einen Elektromotor aufweisen, der ohne Zwischenschaltung eines Frequenzumrichters über zwei getrennte Motorzuleitungen bestromt wird, wobei eine Motorzuleitung alle für einen Betrieb des Elektromotors erforderliche elektrischen Leitungen aufweist. Dies bedeutet im Falle eines Dreiphasen-Drehstroms, dass eine Motorzuleitung drei Phasen L1, L2 und L3 sowie einen optionalen Nullleiter N und eine Erdungsleitung PE umfasst. Die Elektromotoren solcher Antriebsvorrichtungen sind derart konfiguriert, dass sich bei einer elektrischen Speisung über eine erste Motorzuleitung A eine erste Drehfrequenz einstellt und sich bei einer elektrischen Speisung über die zweite Motorzuleitung B eine zweite Drehfrequenz einstellt. Dies gilt aufgrund von Wicklungs- und Wicklungsschaltungsdetails des betreffenden Elektromotors selbst dann, wenn der elektrische Strom für beide Motorzuleitungen von ein und demselben Wechselstromnetz mit einer festen Frequenz abgegriffen wird.

Modernere Antriebsvorrichtungen (mit einem Frequenzumrichter) können durch eine geeignete Ansteuerung der Halbleiter-Schaltelemente zwar problemlos verschiedenen Drehzahlen ansteuern, sie sind jedoch insbesondere aufgrund der Notwendigkeit eines geeigneten Steuersignals für den Frequenzumrichter ohne elektrische Umbaumaßnahmen nicht kompatibel mit den vorstehend beschriebenen bekannten Antriebsvorrichtungen für ältere Lüftungsanlagen.

Um im Rahmen einer Modernisierung einer Lüftungsanlage die Effizienz von Lüftern zu erhöhen, wäre es wünschenswert, wenn man eine bekannte Antriebsvorrichtung (ohne Frequenzumrichter) ohne Umbaumaßnahmen elektrischer und/oder mechanischer Art gegen eine moderne Antriebseinheit (mit Frequenzumrichter) austauschen könnte. Dadurch könnten die Elektromotoren mit einer höheren Drehzahl betrieben werden, was in bekannter Weise (wie in der o.g. WO 2015/071213 A1 beschrieben) zu einer Effizienzerhöhung und damit zu geringeren Betriebskosten einer Lüftungsanlage führt.

### Zusammenfassung der Erfindung

Der Erfindung liegt die Aufgabe zugrunde, für einen Lüfter einer Lüftungsanlage eine energieeffiziente Antriebseinheit mit einem Frequenzumrichter zu schaffen, welche im Rahmen einer möglichst einfachen und kostengünstigen Modernisierung einer Lüftungsanlage ohne elektrische Umbaumahnahmen eine bekannte weniger energieeffiziente Lüfter Antriebsvorrichtung ersetzen kann.

Diese Aufgabe wird gelöst durch die Gegenstände der unabhängigen Patentansprüche. Vorteilhafte Ausführungsformen der vorliegenden Erfindung sind in den abhängigen Ansprüchen beschrieben.

Gemäß einem ersten Aspekt der Erfindung wird beschrieben eine Antriebseinheit für einen Lüfter einer stationären Lüftungsanlage für ein Gebäude. Die beschriebene Antriebseinheit weist auf (a) einen permanenterregten Synchronmotor mit einer Antriebswelle; (b) ein motorseitiges Antriebsrad, welches mit der Antriebswelle gekoppelt ist und welches konfiguriert ist, über ein zumindest teilweise elastisches mechanisches Koppelelement den Lüfter (über ein lüfterseitiges Antriebsrad) anzutreiben; (c) einen Frequenzumrichter zum Versorgen (von Wicklungen eines Stators) des Synchronmotors mit einer elektrischen Wechselspannung mit einer vorgegebenen Frequenz; (d) eine elektrische Schaltung mit (c1) einem ersten Leistungseingang zum Empfangen von elektrischer Leistung aus einem Versorgungsnetz über einen ersten Strompfad, (c2) einem zweiten Leistungseingang zum Empfangen von elektrischer Leistung aus dem Versorgungsnetz über einen zweiten Strompfad, (c3) einem (einzigen) Leistungsausgang zum Ausgeben von elektrischer Leistung, die über den ersten Strompfad und/oder den zweiten Strompfad empfangen wird, an einen (einzigen) Leistungseingang des Frequenzumrichters und (c4) einen Drehzahl-Steuerausgang zum Ausgeben eines Drehzahl-Steuersignals an einen Steuereingang des Frequenzumrichters. Erfindungsgemäß ist die elektrische Schaltung konfiguriert, bei einem Empfang von elektrischer Leistung über den ersten Strompfad ein erstes Drehzahl-Steuersignal auszugeben, welches den Frequenz-umrichter dazu veranlasst, den Synchronmotor mit einer ersten Drehzahl zu betreiben, und bei einem Empfang von elektrischer Leistung über den zweiten Strompfad ein zweites Drehzahl-Steuersignal (an den Steuereingang des Frequenzumrichters) auszugeben, welches den Frequenzumrichter dazu veranlasst, den Synchronmotor mit einer zweiten Drehzahl zu betreiben, wobei die zweite Drehzahl unterschiedlich ist zu der ersten Drehzahl.

Der beschriebenen Antriebseinheit liegt die Erkenntnis zugrunde, dass eine an sich bekannte Drehzahlcodierung für einen Elektromotor anhand eines Flusses von elektrischer Leistung von dem Versorgungsnetz zu dem Elektromotor, wobei der elektrische Leistungsfluss selektiv über den ersten Strompfad und/oder den zweiten Strompfad erfolgt, auch für eine Antriebseinheit durchgeführt werden kann, welche einen Frequenzumrichter zur Bereitstellen eines Wechselstromes mit einer vorgegebenen Frequenz umfasst, welche indikativ ist für die jeweils aktuelle Drehzahl des Elektromotors. Von besonderem Vorteil ist es, dass sich die elektrischen Anschlüsse der erfindungsgemäßen Antriebseinheit nicht von den elektrischen Anschlüssen einer herkömmlichen Antriebseinheit unterscheiden müssen. Eine solche herkömmliche Antriebseinheit realisiert ihre Drehzahlcodierung ebenfalls über eine selektive Verwendung von zwei Strompfaden, jedoch ist eine spezielle Ausgestaltung von einer Mehrzahl von Spulenwicklungen und insbesondere sind gezielt vorgesehene elektrische Verbindungen zwischen den einzelnen Spulenwicklungen und den verschiedenen Strompfaden dafür verantwortlich, dass sich abhängig von der Stromzuführung über die verschiedenen Strompfade der betreffenden Elektromotor mit einer jeweils vorgegebenen unterschiedlichen Drehzahl dreht.

Die Verwendung eines von einem Frequenzumrichter angetriebenen Synchronmotors in Verbindung mit der erfindungsgemäßen Drehzahlcodierung anhand von unterschiedlichen Strom- bzw. Leistungszuführungen über verschiedene Strompfade hat den Vorteil, dass der Synchronmotor mit einer hohen Drehzahl betrieben werden kann, was in bekannter Weise und wie vorstehend beschrieben, zu einer hohen Effizienz des Synchronmotors führt.

Der Synchronmotor kann beispielsweise mit einer Drehzahl betrieben werden, welche deutlich höher ist als die Drehzahl, die in der Praxis für den Lüfter der primären Lüftungsanlage gewünscht ist. Dies liegt daran, dass eine solche überhöhte (primäre) motorseitige Drehzahl durch eine geeignete Drehzahl-Untersetzung in eine gewünschte reduzierte lüfterseitige Drehzahl umgewandelt werden kann, welche unmittelbar die Drehzahl des Lüfters bestimmt. Für eine solche Untersetzung kommt neben der Verwendung eines geeigneten mechanischen Getriebes insbesondere eine Untersetzung mittels einer geeigneten radialen Dimensionierung (i) des motorseitigen Antriebsrads und (ii) des lüfterseitiges Antriebsrads in Frage, wobei die beiden Antriebsräder beispielsweise über einen Riemen mechanisch miteinander gekoppelt sind.

Die erfindungsgemäße Antriebseinheit mit den wesentlichen Komponenten (i) elektrische Schaltung, (ii) Frequenzumrichter und (iii) Synchronmotor kann auf vorteilhafte Weise als ein kompaktes elektromechanisches Austauschmodul realisiert sein, welches im Rahmen einer Modernisierung der stationären Lüftungsanlage eine herkömmliche Antriebsvorrichtung ohne Frequenzumrichter ersetzt. Dabei kann eine Rückwärtskompatibilität mit allen elektrischen und/oder mechanischen Installationen gegeben sein, so dass eine solche Modernisierung auf einfache und effiziente Weise durchgeführt werden kann.

Unter dem Begriff "Lüfter" kann in diesem Dokument jede räumlich körperliche Struktur verstanden werden, welche bei einer Rotation die umgebende Luft oder allgemein ein umgebendes Gas in Bewegung versetzt. Ein Lüfter kann beispielsweise ein sog. Schaufelrad sein, welches die Luft, mit der es wechselwirkt, radial "auswirft" und deshalb als Radial- oder Zentrifugallüfter bezeichnet wird. Ein Lüfter kann aber ebenso ein Propeller sein, welche die Luft im Wesentlichen entlang seiner Rotationsachse bzw. Antriebswelle bewegt. Ein Lüfter im Sinne dieser Anmeldung kann aber auch eine räumlich körperliche Struktur sein, welche Luft überwiegend in eine "schräge Richtung" fördert, welche zwischen der radialen Richtung und der axialen Richtung liegt.

Unter dem Begriff "Synchronmotor" kann in diesem Dokument eine elektrische Antriebmaschine verstanden werden, bei dem sich im Betrieb ein magnetisch erregter Läufer (Rotor) synchron von einem bewegten magnetischen Drehfeld im Stator mitgenommen wird. Ein permanenterregter Synchronmotor verwendet für eine (zeitlich) konstante Magnetisierung des Läufers einen oder mehrere Permanentmagnete, beispielsweise einen besonders starken Neodym-Eisen-Bor Magneten. Ein permanenterregter Synchronmotor benötigt im Gegensatz zu einem fremderregten Synchronmotor, bei dem der Rotor mittels zumindest eines bestromten Elektromagneten magnetisiert wird, keine Schleifkontakte wie metallische Bürsten für eine Stromführung hin und von dem Rotor.

Unter dem Begriff "stationäre Lüftungsanlage" kann in diesem Dokument insbesondere eine Lüftungsanlage verstanden werden, welche im Betrieb fest mit einem Gebäude verbunden ist. Eine solche stationäre Lüftungsanlage wird häufig auch als "primäre Lüftungsanlage" bezeichnet. Eine stationäre Lüftungsanlage steht damit im Gegensatz zu einer sog. "mobilen Lüftungsanlage", beispielsweise einem Ventilator, der von einer Bedienperson an eine geeignete Position platziert werden kann. Eine mobile Lüftungsanlage wird häufig auch als "sekundäre Lüftungsanlage" bezeichnet.

Unter dem Begriff "mechanisches Koppelelement" kann in diesem Dokument insbesondere ein längliches Koppelelement verstanden werden, welches bevorzugt in Form eines geschlossenen Bandes vorliegt und welches für eine Kraft- bzw. Energieübertragung zwischen zwei drehbaren Wellen vorgesehen ist. Das mechanische Koppelelement kann im Betrieb insbesondere an dem Außenumfang zweier Antriebsräder anliegen, wobei ein Antriebsrad jeweils einer der beiden drehbaren Wellen zugeordnet bzw. daran befestigt ist. Konkret ist das beschriebene motorseitige Antriebsrad der beiden Wellen einer Antriebswelle des Synchronmotors zugeordnet und das andere Antriebsrad, welches in diesem Dokument als lüfterseitiges Antriebsrad bezeichnet wird, ist einer Antriebswelle des Lüfters zugeordnet. Das mechanisches Koppelelement kann beispielsweise ein Keilriemen, Antriebsriemen, Flachriemen, Rundriemen und/oder Zahnriemen sein.

Unter dem Begriff "Antriebsrad" kann in diesem Dokument jede Art von Rotationskörper verstanden werden, welcher an einer der beiden o.g. drehbaren Wellen befestigt ist. Das Antriebsrad kann beispielsweise eine Antriebsscheibe und insbesondere eine Rillenscheibe sein, deren am Außenumfang ausgebildeten umfängliche Rille für eine stabile Führung des umlaufenden mechanischen Koppelelements sorgt.

Unter dem Begriff "zumindest teilweise elastisch" kann in diesem Dokument insbesondere eine Dehnungseigenschaft des mechanischen Koppelelements zu verstanden werden, welche dazu führt, dass das mechanische Koppelelement im Betrieb mit einer gewissen Spannkraft an den beiden Antriebrädern anliegt. Das mechanische Element kann dabei teilweise aus elastischen und teilweise aus unelastischen Materialien bestehen, die so miteinander verbunden sind, dass sich zumindest während eines Betriebs das mechanische Koppelelement in einem elastischen Dehnungsbereich befindet.

Unter dem Begriff "Frequenzumrichter" kann in diesem Dokument jede Art von elektrischer Schaltung verstanden werden, welche eine Wechselspannung bzw. einen Wechselstrom mit einer ersten Frequenz in eine Wechselspannung bzw. einen Wechselstrom mit einer zweiten Frequenz umwandelt, welche unterschiedlich zu der ersten Frequenz ist. Bei einer Frequenzumrichtung kann optional auch noch die Amplitude von Strom bzw. Spannung verändert werden. Die Frequenzumrichtung dient in der Regel und auch bei der in diesem Dokument beschriebenen Technologie dazu, eine elektrische Arbeitsmaschine, hier den Synchronmotor, mit elektrischer Energie mit einer passenden Frequenz zu versorgen.

Gemäß einem Ausführungsbeispiel der Erfindung ist das erste Drehzahl-Steuersignal oder das zweite Drehzahl-Steuersignal ein Nullsignal ist. Dies hat den Vorteil, dass eine Drehzahl der beiden Drehzahlen auf einfache Weise dadurch an den Frequenzumrichter signalisiert werden kann, dass ein von einem Nullpegel unterschiedliches Drehzahl-Steuersignal ausbleibt. Das genannte Nullsignal (mit einem Signalpegel von Null) entspricht damit in der elektronischen Praxis einem Ausbleiben eines Drehzahl-Steuersignals.

Das beschriebene Drehzahl-Steuersignal kann somit ein beliebiges elektronisches und/oder optisches Signal mit einem Informationsgehalt sein, welches bzw. welcher dem Steuereingang des Frequenzumrichters zugeführt wird, um diesen zu veranlassen, den Synchronmotor mit der entsprechenden Drehzahl zu betreiben. Dabei kann das elektronische Drehzahl-Steuersignal einen Spannungs- und/oder Strompegel von Null haben. Ebenso kann das optische Drehzahl-Steuersignal auch ein optisches Signal oder einen optischen Puls mit der Intensität Null sein, wobei sich der Begriff optisch auf alle möglichen Spektralbereiche bezieht, welche in der Praxis für eine Informationsübertragung verwendbar sind. Dies bedeutet, wie vorstehend beschrieben, dass bei Ausführungsformen der Erfindung auch eine Nicht-Existenz einer physikalischen Größe (z.B. Strom, Spannung, Lichtwellen) des Drehzahl-Steuersignals den Informationsgehalt aufweist, dass über den betreffenden Strompfad keine Leistungsversorgung stattfinden und stattdessen die Leistungsversorgung über den anderen Strompfad erfolgt.

Gemäß einem weiteren Ausführungsbeispiel der Erfindung ist die elektrische Schaltung derart konfiguriert, dass lediglich einer der beiden Strompfade auf eine Übertragung von elektrischer Leistung überwacht wird. Dies bedeutet, dass die elektrische Schaltung lediglich eine einzige Leistung-Überwachungseinrichtung aufweisen muss, welche exklusiv bzw. genau einem der beiden Strompfade zugeordnet ist. Dadurch kann die elektrische Schaltung auf vorteilhafte Weise mit einem Minimum an Sensorik einfach und kostengünstig realisiert werden.

Gemäß einem weiteren Ausführungsbeispiel der Erfindung ist die elektrische Schaltung derart konfiguriert, dass beide Strompfade jeweils auf eine Übertragung von elektrischer Leistung überwacht werden. Dadurch kann, auf Kosten einer etwas umfangreicheren Sensorik für die Leistungsübertragung, bei einem fehlerfreien Betrieb des Lüfters, welcher Betrieb sich durch eine exklusive Leistungszuführung entweder über den ersten Strompfad oder den zweiten Strompfad auszeichnet, redundant und damit besonders zuverlässig festgestellt werden, welche Drehzahl eingestellt werden soll.

Darüber hinaus können auch Fehler hinsichtlich der Leistungszuführung erkannt werden. Diese Fehler können darin bestehen, dass über keinen der beiden Strompfade elektrische Leistung zugeführt wird oder dass über beide Strompfade elektrische Leistung zugeführt wird. In anderen Ausführungsformen, welche nachstehend beschrieben und erläutert werden, kann eine Erkennung einer Leistungszuführung gleichzeitig über beide Strompfade dazu verwendet werden, eine dritte Drehzahl für den Synchronmotor zu codieren. In diesem Fall ist es erforderlich, dass die elektrische Schaltung bei einer "doppelten Leistungszuführung" ein drittes Drehzahl-Steuersignal generiert und an den Steuereingang des Frequenzumrichters ausgibt, damit dieser den Synchronmotor mit einem Wechselstrom mit der entsprechenden Frequenz bestromen kann.

Gemäß einem weiteren Ausführungsbeispiel der Erfindung ist der Synchronmotor eine Dreiphasen Drehstrommotor. Ferner weist jeder der beiden Strompfade drei Leitungen für jeweils eine Phase eines dreiphasigen Drehstroms auf. Dies hat den Vorteil, dass die beschriebene Antriebseinheit mit einem Typ von (synchronen) Elektromotor realisiert werden kann, welcher Typ weit verbreitet ist und daher vergleichsweise kostengünstig und/oder einfach zu beschaffen ist.

Es wird darauf hingewiesen, dass bei dieser Ausführungsform auch die beiden Leistungseingänge und der (einzige) Leistungsausgang der elektrischen Schaltung sowie der (einzige) Leistungseingang des Frequenzumrichters jeweils drei elektrische Kontakte aufweisen, wobei jeweils ein Kontakt einer bestimmten Phase des dreiphasigen Drehstroms zugeordnet ist. Selbstverständlich ist bei dieser Ausführungsform der Frequenzumrichter ein sog. Dreiphasen-Frequenzumrichter, welcher einen eingehenden dreiphasigen Drehstrom mit einer ersten Frequenz in einen ausgehenden dreiphasigen Drehstrom mit einer unterschiedlichen zweiten Frequenz wandelt.

Gemäß einem weiteren Ausführungsbeispiel der Erfindung ist die elektrische Schaltung konfiguriert, für den ersten Strompfad und/oder für den zweiten Strompfad einen Fluss von elektrischer Leistung (a) durch lediglich eine einzige Leitung oder (b) durch genau zwei Leitungen oder (c) durch alle drei Leitungen zu detektieren.

Eine an sich völlig ausreichende Detektion eines elektrischen Leistungsflusses auf lediglich einer Leitung hat den Vorteil, dass die Leistungsflussdetektion auf besonders einfache Weise und damit sehr kostengünstig mit wenigen elektronischen Komponenten realisiert werden kann.

Eine Leistungsflussdetektion auf zwei Leitungen oder auf allen drei Leitungen kann dazu ausgenutzt werden, zusätzlich zu der vorstehend im Detail beschriebenen Erkennung der Drehzahlanforderung auch noch einen eventuellen Fehler bei der Leistungsversorgung zu erkennen, bei dem auf einer Leitung oder auf zwei Leitungen keine elektrische Leistung übertragen wird (Phasenausfall) und damit das Versorgungsnetz und auch der Frequenzumrichter und/oder der Synchronmotor elektrisch asymmetrisch belastet wird. Besonders einfach kann die beschriebene Phasenausfalldetektion mit geeigneten nachstehend beschriebenen Stromsensoren realisiert werden, wobei jeweils ein Stromsensor exklusiv einer Leitung zugeordnet ist.

Gemäß einem weiteren Ausführungsbeispiel der Erfindung weist der Synchronmotor eine Leistung im Bereich von 1 kW bis 50 kW und bevorzugt eine Leistung im Bereich von 2 kW bis 30 kW auf. Dies hat den Vorteil, dass auch eine stationäre Lüftungsanlage mit einer hohen Gesamtlüftungsleistung mit vergleichsweise wenigen erfindungsgemäßen Antriebseinheiten realisiert werden kann.

Gemäß einem weiteren Ausführungsbeispiel der Erfindung ist die elektrische Schaltung in den Frequenzumrichter integriert. Dies hat den Vorteil, dass die erfindungsgemäße Antriebseinheit auf einfache Weise hergestellt und/oder in einer kompakten Bauform realisiert werden kann. Eine vereinfachte Herstellung kann dabei damit zusammenhängen, dass durch die Realisierung von Frequenzumrichter und elektrischer Schaltung in einem einzigen elektrischen Modul die Anzahl an Komponenten, die bei der Herstellung der erfindungsgemäßen Antriebseinheit elektrisch verdrahtet werden müssen, reduziert ist. Die Möglichkeit der Realisierung der erfindungsgemäßen Antriebseinheit in einer kompakten Bauform kann insbesondere damit zusammenhängen, dass im Vergleich zu einem von Frequenzumrichter und von elektrischer Schaltung benötigten Gesamtvolumen der Platzbedarf für ein elektrisches Modul, welches die Funktionalitäten von elektrischer Schaltung und Frequenzmodul vereinigt, geringer ist. Damit erfordert der Einsatz der erfindungsgemäßen Antriebseinheit in einer "alten" stationären Lüftungsanlage, welche bisher herkömmliche Antriebsvorrichtungen ohne Frequenzumrichter aufweist, weder eine Umgestaltung der elektrischen Schnittstelle noch eine Umgestaltung der mechanischen Schnittstelle zwischen Antriebseinheit und Lüfter.

Gemäß einem weiteren Ausführungsbeispiel der Erfindung ist der Frequenzumrichter konfiguriert, eine Änderung der Drehzahl von der ersten Drehzahl zu der zweiten Drehzahl (oder umgekehrt von der zweiten Drehzahl zu der ersten Drehzahl) mit einer reduzierten Drehzahl-Änderungsgeschwindigkeit zu veranlassen, wobei die reduzierte Drehzahl-Änderungsgeschwindigkeit um einen Faktor GF geringer ist als eine maximal mögliche Drehzahl-Änderungsgeschwindigkeit des Synchronmotors. Dabei ist der Faktor GF größer als 1,5, bevorzugt größer als 3 und weiter bevorzugt größer als 6. Dies bedeutet anschaulich ausgedrückt, dass der Frequenzumrichter bzw. genauer eine Steuerung des Frequenzumrichters, welche Steuerung die Halbleiterschalter des Frequenzumrichters öffnet bzw. schließt, die Änderung zwischen zwei unterschiedlichen Drehzahlen im Vergleich zu dem diskreten Umschalten der Leistungszuführung zwischen den verschiedenen Strompfaden verlangsamt. Eine solche Verlangsamung ist insbesondere dann von Vorteil, wenn eine quasi instantane Drehzahländerung durch ein quasi gleichzeitiges (i) Abschalten bzw. Deaktivieren der Leistungszuführung über den ersten Strompfad und (ii) Einschalten bzw. Aktivieren der Leistungszuführung über den zweiten Strompfad erfolgt. Vorteilhaft kann eine solche Verlangsamung aber auch dann sein, wenn die Drehzahländerung zunächst durch (i) ein Abschalten bzw. Deaktivieren der Leistungszuführung über den ersten Strompfad und etwas verzögert durch (ii) ein Einschalten bzw. Aktivieren der Leistungszuführung über den zweiten Strompfad erfolgt. Bei einem solchen verzögerten Einschalten bzw. Aktivieren der Leistungszuführung, bei dem für eine (kurze) Zeitspanne die beschriebene Antriebseinheit nicht mit Energie von dem Versorgungsnetz versorgt wird, kann die Zeitspanne ohne Energieversorgung durch eine Energieentnahme aus einem sog. Zwischenkreiskondensator eines Gleichspannung-Zwischenkreises des Frequenzumrichters überbrückt werden. Abhängig von der elektrischen Kapazität eines solchen Zwischenkreiskondensators kann damit der Betrieb des Frequenzumrichters, welcher Betrieb sowohl die Ansteuerung der Halbleiterschalter des Frequenzumrichters als auch die Ausspeisung von Energie zu dem Synchronmotor umfasst, für eine mehr oder weniger lange Zeitspanne aufrechterhalten werden.

Sowohl bei einem instantanen Umschalten der Leistungsversorgung zwischen beiden Strompfaden als auch bei einem verzögerten Umschalten kann die Steuerung der Frequenzumrichter bzw. eine Steuerung des Frequenzumrichters bereits bei einem Abschalten der Leistungsversorgung über den ersten (bzw. zweiten) Strompfad erkennen, dass eine Änderung von der ersten Drehzahl zu der zweiten Drehzahl (bzw. von der zweiten Drehzahl zu der ersten Drehzahl) bevorsteht. Die Steuerung des Frequenzumrichters kann ab dem Zeitpunkt des Abschaltens dafür sorgen, dass sich die Drehzahl von der ursprünglichen ersten (bzw. zweiten) Drehzahl mit der gebotenen Langsamkeit zu der gewünschten zweiten (bzw. ersten) Drehzahl ändert.

Es wird darauf hingewiesen, dass bei der hier beschriebenen Betrachtung die erste (oder die zweite) Drehzahl auch Null sein kann. Dies bedeutet, dass die beschriebene Reduzierung der Drehzahl-Änderungsgeschwindigkeit auch bei einem Anschalten des Synchronmotors bzw. bei einem Abschalten des Synchronmotors durchgeführt werden kann.

Die beschriebene maximal mögliche Drehzahl-Änderungsgeschwindigkeit des Synchronmotors kann eine motorspezifische Charakteristik des Synchronmotors sein, welche von der konkreten Ausgestaltung des Synchronmotors abhängt. Entscheidend für die maximal mögliche Drehzahl-Änderungsgeschwindigkeit können insbesondere die elektrische Leistung des Synchronmotors und die Massenträgheit des Rotors des Synchronmotors sein.

Die mit dieser Ausführungsform beschriebene Reduzierung der Drehzahl-Änderungsgeschwindigkeit kann auf vorteilhafte Weise zu einem reduzierten Verschleiß bzw. einer reduzierten Abnutzung der Antriebseinheit bzw. eines gesamten Lüfters samt Antriebseinheit beitragen. Dies gilt insbesondere bei einem Riemenantrieb, bei dem das beschriebene mechanische Koppelelement ein Riemen ist, für einen Verschleiß des Riemens. Dieser muss nämlich bei einer reduzierten Drehzahl-Änderungsgeschwindigkeit nur reduzierte trägheitsbedingte Drehmomente zwischen den beiden Antriebsrädern übertragen.

Es wird darauf hingewiesen, dass mit erfindungsgemäßen Antriebseinheiten eine Drehzahl-Änderungszeit zwischen zwei typischen Drehzahlen bevorzugt 6 bis 8 Sekunden betragen kann. Ein dafür vorgesehener hocheffizienter Synchronmotor (z.B. mit einer Leistung von 5 kW) könnte eine entsprechende Drehzahländerung in ca. einer einzigen Sekunde erreichen. Versuche haben ergeben, dass mit der erfindungsgemäßen Lösung bereits riemenschonende Effekte im vorgesehenen Leistungsbereich erreicht werden, wenn die eingependelten Drehzahlen bei einer Drehzahländerung innerhalb von mehr als 2 Sekunden, bevorzugt innerhalb von mehr als 4 Sekunden und weiter bevorzugt innerhalb von mehr als 6 Sekunden erreicht werden.

Gemäß einem weiteren Ausführungsbeispiel der Erfindung weist die elektrische Schaltung auf eine Strom-Sensoreinrichtung auf, welche konfiguriert ist, (i) einen Stromfluss über den ersten Strompfad und/oder über den zweiten Strompfad zu detektieren und (ii) das erste Drehzahl-Steuersignal und das zweite Drehzahl-Steuersignal zu generieren.

Eine Detektion eines elektrischen Leistungsflusses anhand von elektrischem Strom hat den Vorteil, dass der Leistungsfluss auf besonders einfache Weise detektiert werden kann. Insbesondere können für die Strom-Sensoreinrichtung übliche Stromsensoren verwendet werden. Lediglich beispielshaft seien in diesem Zusammenhang Hall Sensoren, die eine besonders hohe Empfindlichkeit aufweisen, oder Sensoren mit einem Reed-Schalter genannt, wobei letzter im Inneren einer Spule angeordnet ist, durch welche der zu erfassende Strom fließt.

Die mit dieser Ausführungsform beschriebene Stromdetektion hat ferner den Vorteil, dass die ganze elektrische Schaltung auch in Bezug auf die erforderliche Detektion des Leistungsflusses, innerhalb einer kompakten Bauform realisiert werden kann. Dies vereinfacht auf vorteilhafte Weise die vorstehend beschriebene Integration der gesamten elektrischen Schaltung in den Frequenzumrichter. Außerdem kann die Stromdetektion mit einem sehr geringen Verbrauch von elektrischer Leistung realisiert werden.

Bei bevorzugten Ausführungsformen ist eine größte Abmessung der Strom-Sensoreinrichtung kleiner als 10 cm, bevorzugt kleiner als 8 cm und weiter bevorzugt kleiner als 6 cm.

Gemäß einem weiteren Ausführungsbeispiel der Erfindung weist die elektrische Schaltung ein elektronisches Bauelement zur Signalglättung auf, welches geschaltet ist (a) zwischen einem Signalpfad der Strom-Sensoreinrichtung und/oder einem Signalpfad einer der Strom-Sensoreinrichtung nachgeschalteten Auswerteelektronik der elektrischen Schaltung und (b) einem vorgegebenen elektrischen Bezugspotential (typsicherweise OV) und/oder einem anderen Signalpfad der Strom-Sensoreinrichtung.

Das beschriebene Bauelement zur Signalglättung kann auf vorteilhafte Weise ein unerwünschtes Rauschen und/oder in den betreffenden Signalpfad unerwünscht eingekoppeltes Hochfrequenz-Störsignal unterdrücken. Dies kann auch bei Betriebsbedingungen mit einem starken "Elektrosmog" zu einer hohen Zuverlässigkeit bzgl. der Drehzahlcodierung führen. Bei manchen Ausführungsformen ist das Bauelement zur Signalglättung ein Kondensator.

Gemäß einem weiteren Ausführungsbeispiel der Erfindung ist das Bauelement zur Signalglättung ein ohmscher Widerstand (bzw. ein ohmscher Lastwiderstand), wobei der ohmsche Widerstand bevorzugt einen Widerstandwert im Bereich von 50 Ohm bis 100.000 Ohm hat und weiter bevorzugt einen Widerstandwert im Bereich von 2.000 Ohm bis 50.000 Ohm hat.

Die Verwendung eines solchen zusätzlichen ohmschen Widerstands bzw. Lastwiderstands (von z.B. 10.000 Ohm) an einem Ausgang der Strom-Sensoreinrichtung oder einer nachgeschalteten Auswerteelektronik kann zu einer besonders hohen Betriebssicherheit und/oder eine fehlerrobusten Drehzahlcodierung führen. Dies gilt insbesondere in Anbetracht der üblicherweise relativ rauen Betriebsumfelder einer stationären Lüftungsanlage. So können beispielsweise durch von außen induzierte Ströme und/oder Spannungen (vgl. auch Aspekte der sog. Elektromagnetischen Verträglichkeit, EMV), ggf. auch in Kombination mit einer Restremanenz einer Messspule der Strom-Sensoreinrichtung, Fehlumschaltungen bei der gewünschten Drehzahl auftreten. Der beschriebene zusätzliche ohmsche Widerstand kann sicherstellen, dass die Detektion des Strompfades, über welchen der Leistungsfluss in den einzigen Leistungseingang des Frequenzumrichters erfolgt, zuverlässiger wird, was wiederum die gesamte Systemzuverlässigkeit erhöht. In diesem Zusammenhang wurde erstaunlicherweise festgestellt, dass ein ohmscher Lastwiderstand an einer Messspule der Strom-Sensoreinrichtung und/oder an einer nachgeschalteten Auswerteelektronik zu einer erhebliche Zuverlässigkeitsverbesserung der Drehzahlcodierung führt. Insbesondere können störende Hysterese-Effekten bei Drehzahlumschaltungen reduziert werden.

Gemäß einem weiteren Ausführungsbeispiel der Erfindung weist die elektrische Schaltung eine Spannung-Sensoreinrichtung auf, welche konfiguriert ist, (i) eine an dem ersten Strompfad und/oder an dem über den zweiten Strompfad anliegende Spannung zu detektieren und (ii) das erste Drehzahl-Steuersignal und das zweite Drehzahl-Steuersignal zu generieren.

Eine Erkennung der Drehzahlanforderung anhand der an dem jeweiligen Strompfad anliegenden Spannung hat den Vorteil, dass bei der Verwendung von geeigneten spannungssensitive Bauelementen ein Umschalten zwischen den beiden Spannungsversorgungen besonders schnell erkannt werden kann. Dies hängt damit zusammen, dass bei einer Spannungsdetektion keine induktiven Bauelemente wie Spulen verwendet werden müssen, welche aufgrund ihrer Induktivität eine gewisse zeitliche "Messträgheit" aufweisen. Außerdem kann durch die beschriebene Spannungssteuerung sichergestellt werden, dass beim Umschalten der Leistungszuführung zwischen den beiden Strompfaden keine unerwünschte Rückspannungen auftreten, welche aufgrund der Induktivität eines Stromsensors an demjenigen Strompfad auftreten könnten, der nach dem Umschalten für die Leistungsversorgung des Synchronmotors nicht mehr benutzt wird.

Gemäß einem weiteren Ausführungsbeispiel der Erfindung weist die Spannung-Sensoreinrichtung auf(a) eine erste steuerbare Schaltereinrichtung, welche zwischen dem ersten Leistungseingang und dem Leistungsausgang geschaltet ist und welche bei einer Leistungsversorgung über den ersten Strompfad geschlossen und bei einer Leistungsversorgung über den zweiten Strompfad geöffnet ist, und (b) eine zweite steuerbare Schaltereinrichtung, welche zwischen dem zweiten Leistungseingang und dem Leistungsausgang geschaltet ist und welche bei einer Leistungsversorgung über den zweiten Strompfad geschlossen und bei einer Leistungsversorgung über den ersten Strompfad geöffnet ist. Dabei ist der Drehzahl-Steuerausgang sowohl mit der ersten steuerbaren Schaltereinrichtung als auch mit der zweiten steuerbaren Schaltereinrichtung elektrisch verbunden.

Das beschriebene wechselseitige Öffnen bzw. Schließen der beiden Schaltereinrichtungen, welches zumindest dann gegeben ist, wenn für eine Leistungsversorgung des Synchronmotors immer nur einer der beiden Strompfade verwendet wird und, kann als eine gegenseitige Verriegelung der beiden Schaltereinrichtungen angesehen werden. Dies hat den Vorteil, dass die beiden Schaltereinrichtung immer in einem definierten Schaltzustand befinden, was wiederum zu einer hohen Betriebssicherheit und zu einer fehlerrobusten Drehzahleinstellung führt.

Die beiden Schalteinrichtungen können jeweils zumindest einen elektromechanischen und/oder elektronischen Schalter aufweisen. Ein elektromechanischer Schalter kann dabei von einem mechanischen Aktuator, beispielsweise von einem Relais angesteuert werden. Ein elektronischer Schalter, beispielsweise ein geeigneter Hochleistungstransistor, kann in an sich bekannter Weise durch elektronische Steuersignale gesteuert werden, die in geeigneter Weise von den spannungsführen Strompfaden abgeleitet bzw. abgezweigt werden.

Bevorzugt weist jede der steuerbaren Schaltereinrichtungen eine Anzahl von (elektromechanischen und/oder elektronischen) Schaltern auf, welche der der Anzahl an stromführenden Leitungen in dem jeweiligen Strompfad entspricht. Bei einem üblichen Drehstrom sind dies also drei Schalter pro Schalteinrichtung bzw. Strompfad. Es können für jede steuerbare Schaltereinrichtung aber auch noch mehr Schalter verwendet werden, welche beispielsweise sog. Hilfskontakte schließen bzw. miteinander verbinden, die für die vorstehend beschriebene Verriegelung der beiden Schaltereinrichtung verwendet werden können und/oder über welche die beiden Drehzahl-Steuersignale generiert bzw. ausgegeben werden.

Gemäß einem weiteren Ausführungsbeispiel der Erfindung weist die erste steuerbare Schaltereinrichtung auf ein erstes Relais mit einem ersten magnetischen Aktuator, mit jeweils einem ersten Schalter für jeweils eine (einzelne) elektrische Phase des ersten Strompfads und einem zusätzlichen ersten Hilfsschalter. Ferner weist die zweite steuerbare Schaltereinrichtung auf ein zweites Relais mit einem zweiten magnetischen Aktuator, mit jeweils einem zweiten Schalter für jeweils eine (einzelne) elektrische Phase des zweiten Strompfads und einem zusätzlichen zweiten Hilfsschalter. Die Verwendung von Relais hat den Vorteil, dass die beiden steuerbaren Schaltereinrichtungen auf einfache Weise mit bekannten und preiswerten elektromechanischen Bauelementen realisiert werden können.

Gemäß einem weiteren Ausführungsbeispiel der Erfindung sind die beiden Relais derart konfiguriert, dass (i) bei einer Leistungsversorgung über den ersten Strompfad die ersten Schalter geschossen sind, der erste Hilfsschalter geöffnet ist, die zweiten Schalter geöffnet sind und der zweite Hilfsschalter geschlossen ist und (ii) bei einer Leistungsversorgung über den zweiten Strompfad die ersten Schalter geöffnet sind, der erste Hilfsschalter geschlossen ist, die zweiten Schalter geschlossen sind und der zweite Hilfsschalter geöffnet ist.

Die mit dieser Ausführungsform beschriebene gegenseitige bzw. wechselseitige Verrieglung der beiden steuerbaren Schaltereinrichtungen kann auf effiziente Weise dazu beitragen, dass, wie bereits vorstehend beschrieben, eine hohe Betriebssicherheit sowie eine fehlerrobuste Drehzahleinstellung gewährleistet werden kann.

Gemäß einem weiteren Ausführungsbeispiel der Erfindung sind die beiden steuerbaren Schaltereinrichtungen derart miteinander verschaltet, dass (i) bei einer Leistungsversorgung über den ersten Strompfad ein Stromfluss von einer (einzigen) elektrischen Phase des ersten Strompfads über den (geschlossenen) zweiten Hilfsschalter und über den ersten magnetischen Aktuator zu einer anderen elektrischen Phase des ersten Strompfads erfolgt und (ii) bei einer Leistungsversorgung über den zweiten Strompfad ein Stromfluss von einer elektrischen Phase des zweiten Strompfads über den (geschlossenen) ersten Hilfsschalter und über den zweiten magnetischen Aktuator zu einer anderen elektrischen Phase des zweiten Strompfads erfolgt. Dies hat den Vorteil, dass die vorstehend beschriebene gegenseitige bzw. wechselseitige Verrieglung der beiden steuerbaren Schaltereinrichtungen lediglich mit einer einfachen Verdrahtung und ohne weiteren elektrischen und/oder elektromechanischen Bauelemente realisiert werden kann.

Gemäß einem weiteren Ausführungsbeispiel der Erfindung ist die elektrische Schaltung ferner konfiguriert, bei einem Empfang von elektrischer Leistung sowohl über den ersten Strompfad aus auch über den zweiten Strompfad ein drittes Drehzahl-Steuersignal (an den Steuereingang des Frequenzumrichters) auszugeben, welches den Frequenzumrichter dazu veranlasst, den Synchronmotor mit einer dritten Drehzahl zu betreiben, wobei die dritte Drehzahl unterschiedlich ist sowohl zu der ersten Drehzahl als auch zu der zweiten Drehzahl. Dies bedeutet anschaulich ausgedrückt, dass die erfindungsgemäße Drehzahlcodierung auf vorteilhafte Weise auf drei unterschiedliche Drehzahlen erweitert ist, ohne dass dafür ein dritter Strompfad für eine mögliche Übertragung von elektrischer Leistung von dem Versorgungsnetz zu dem Synchronmotor erforderlich ist.

Die hier beschriebene Ausführungsform mit drei möglichen Drehzahlen kann bei einer Modernisierung der stationären Lüftungsanlage eine herkömmliche Antriebsvorrichtung mit einem Elektromotor ersetzen, der lediglich mit zwei verschiedenen Drehzahlen betrieben wird oder betrieben werden kann. Durch die beschriebene Detektion von drei gewünschten Drehzahlzuständen anhand der drei verschiedenen Leistungsversorgungsoptionen (i) nur über den ersten Strompfad, (ii) nur über den zweiten Strompfad und (iii) über beide Strompfade wird es möglich, die Lüftungsleistung ohne große Umbaukosten der Ansteuerung der Lüftungsanlage an den bestehenden Lüftungsbedarf anzupassen und zu minimieren. So kann beispielsweise lediglich durch Softwareänderungen mittels der beschriebenen Codierung von drei Drehzahlen eine modernisierte Lüftungsanlage derart gesteuert werden, dass erst beim Feststellen eines ganz oder fast ganz geöffneten Volumenstromreglers für Luft auf eine höhere Drehzahl geschaltet wird. Umgekehrt kann die Drehzahl des Synchronmotors reduziert werden, wenn alle relevanten Volumenstromregler ein gewisses Maß an Schließung überschritten haben.

Gemäß einem weiteren Ausführungsbeispiel der Erfindung weist die elektrische Schaltung ferner auf einen dritten Leistungseingang zum Empfangen von elektrischer Leistung aus dem Versorgungsnetz über einen dritten Strompfad. Ferner ist die elektrische Schaltung konfiguriert, bei einem Empfang von elektrischer Leistung über den dritten Strompfad ein drittes Drehzahl-Steuersignal (an den Steuereingang des Frequenzumrichters) auszugeben, welches den Frequenzumrichter dazu veranlasst, den Synchronmotor mit einer dritten Drehzahl zu betreiben, welche unterschiedlich ist sowohl zu der ersten Drehzahl als auch zu der zweiten Drehzahl.

Die beschriebene Verwendung des dritten Strompfades zur Codierung der dritten Drehzahl hat den Vorteil, dass auf besonders einfache und zuverlässige Weise (bei Bedarf) die dritte Drehzahl eingestellt werden kann.

Es wird darauf hingewiesen, dass bei weiteren Ausgestaltungen der Erfindung auch mehr als drei Strompfade verwendet werden können. So kann bei Bedarf auch zumindest eine vierte Drehzahl durch einen entsprechenden Fluss von elektrischer Leistung exklusiv über einen der zumindest vier Strompfade erfolgen.

Es wird ferner darauf hingewiesen, dass, in Anlehnung an die vorstehend beschriebene Ausführungsform mit einer Drehzahlcodierung von drei Drehzahlen mit lediglich zwei Strompfaden, auch bei zumindest drei Strompfaden durch eine entsprechende Kombinatorik der "Existenz oder Nichtexistenz" einer Leistungsübertragung auf den jeweiligen Strompfaden eine Drehzahlcodierung von einer Anzahl an Drehzahlen möglich ist, welche (deutlich) höher ist als die Anzahl an zur Verfügung stehenden Strompfaden.

Gemäß einem weiteren Aspekt der Erfindung wird beschrieben eine stationäre Lüftungsanlage für ein Gebäude. Die beschriebene stationäre Lüftungsanlage weist auf (a) einen Lüfter zum Fördern von einem gasförmigen Medium, insbesondere Luft; (b) ein lüfterseitiges Antriebsrad; (c) eine Antriebseinheit gemäß einem der vorangehend beschriebenen Ausführungsbeispiele; und (d) das mechanische Koppelelement, welches das motorseitige Antriebsrad mit dem lüfterseitigen Antriebsrad koppelt.

Der beschriebenen stationären Lüftungsanlage liegt die Erkenntnis zugrunde, dass die vorstehend anhand von zahlreichen Ausführungsformen beschriebene Antriebseinheit einen besonders energieeffizienten Betrieb der stationären Lüftungsanlage ermöglicht. Durch eine geeignete elektrische und mechanische Realisierung der Antriebseinheit kann die Lüftungsanlage auch auf einfache Weise modernisiert werden, in dem eine alte Antriebsvorrichtung (ohne Frequenzumrichter) gegen die hier beschriebene Antriebseinheit ausgetauscht wird.

Gemäß einem Ausführungsbeispiel der Erfindung weist das motorseitige Antriebsrad einen kleineren Durchmesser auf als das lüfterseitige Antriebsrad. Dies erlaubt es, bei einer vorbestimmte bzw. erwünschten Drehzahl des Lüfters bzw. des lüfterseitigen Antriebsrades den Synchronmotor mit einer vergleichsweise hohen Drehzahl zu betreiben. Dadurch kann, wie vorstehend beschrieben, der Synchronmotor mit einer besonders hohen Effizienz betrieben werden.

Gemäß einem weiteren Ausführungsbeispiel der Erfindung ist das mechanisches Koppelelement ein Riemen. Ein Riemen ermöglicht eine besonders einfache mechanisch Kopplung der beiden Antriebsräder.

Gemäß einem weiteren Ausführungsbeispiel der Erfindung ist im Betrieb die die Spannkraft des Riemens weniger als 80%, bevorzugt weniger als 70% und weiter bevorzugt weniger als 60% als die für den Riemen zulässige maximale Spannkraft.

Im Zusammenhang mit Tests von Prototypen wurde von den Erfindern überraschenderweise herausgefunden, dass bei einer Verwendung der erfindungsgemäßen Antriebseinheit (mit Frequenzumrichter) auch eine geringere Riemenspannung ausreicht, um ein Durchdrehen von zumindest einem der beiden Antriebsräder zu verhindern und dadurch einen übermäßigen Verschleiß infolge eines solchen Durchdrehens des Riemens zu verhindern. Im regulären Betrieb der stationären Lüftungsanlage kann demzufolge die Spannung des Riemens gegenüber einem zugelassenen Maximum deutlich reduziert werden. Durch eine reduzierte Spannung wird der Riemen insbesondere an dem bevorzugt kleineren Antriebsrad an der Motorseite, an welchem der Riemen stärker gekrümmt ist, geringer belastet. Dies bedeutet, dass der mögliche Elastizitätsbereich des Riemens weniger ausgeschöpft wird, was zu einer geringeren Alterung und dadurch zu einer längeren Lebensdauer des Riemens führt.

Hinsichtlich der Ursache für die beschriebene Möglichkeit der Reduzierung der Riemenspannung wird von den Erfindern vermutet, dass dies mit der erfindungsgemäßen Verwendung des Frequenzumrichters zu tun hat. Wie vorstehend beschrieben, kann der Frequenzumrichter nämlich so konfiguriert werden, dass ein Umschalten zwischen verschiedenen Drehzahlen vergleichsweise langsam erfolgt, so dass die entsprechend auftretenden Drehbeschleunigungen reduziert und die Riemenbelastung beim Drehzahl-Umschalten gering gehalten werden kann.

Gemäß einem weiteren Ausführungsbeispiel der Erfindung ist der Frequenzumformer in Bezug zu dem Lüfter derart angeordnet, dass der Frequenzumformer von einem von dem Lüfter erzeugten Luftstrom umströmt ist.

Das beschriebene Umströmen kann dadurch erreicht werden, dass der Frequenzumrichter innerhalb einer beliebigen der von Luft umströmten Zone der stationären Lüftungsanlage verbaut ist. Durch die umströmende Luft findet ein zusätzlicher Wärmeabtransport statt, welcher sowohl die Lebensdauer des Frequenzumrichters erhöht als auch der Luft Zusatzenergie in Form von Wärme zuführt, welche z.B. für Heizungszwecke genutzt werden kann.

Gemäß einem weiteren Aspekt der Erfindung wird beschrieben ein Verfahren zum Modernisieren einer stationären Lüftungsanlage für ein Gebäude, wobei die Lüftungsanlage zumindest einen Lüfter aufweist. Das beschriebene Verfahren weist auf (a) ein Ausbauen einer Antriebsvorrichtung für den Lüfter und (b) ein Einbauen einer Antriebseinheit des vorstehend beschriebenen Typs.

Dem beschriebenen Modernisierungsverfahren liegt die Erkenntnis zugrunde, dass eine Bedienperson eine ggf. gealterte bzw. verschleißbehaftete Antriebsvorrichtung auf einfache Weise im Rahmen eines kurzen Arbeitsgangs durch die vorstehend beschrieben Antriebseinheit, welche als eine kompakten Einheit ausgebildet sein kann, ersetzen kann. Eine Modernisierung der stationären Lüftungsanlage kann damit auch dann zügig und schnell erfolgen, wenn im Rahmen der Modernisierung eine Mehrzahl von Antriebsvorrichtungen gegen jeweils eine erfindungsgemäße Antriebseinheit ausgestaucht wird.

Gemäß einem Ausführungsbeispiel der Erfindung ist die Antriebsvorrichtung frei von einem Frequenzumrichter.

Wie bereits vorstehend beschrieben, trägt die Verwendung eines Frequenzumrichters typischerweise zu einem hohen Wirkungsgrad der erfindungsgemäßen Antriebseinheit bei. Damit kann auf vorteilhafte Weise durch die beschriebene Modernisierung die Effizienz der gesamten Lüftungsanlage verbessert werden.

Gemäß einem weiteren Ausführungsbeispiel der Erfindung weist das motorseitige Antriebsrad der Antriebseinheit einen Durchmesser auf, der kleiner ist als ein Durchmesser eines motorseitigen Antriebsrades der Antriebsvorrichtung.

Durch die beschriebene Umrüstung der Lüftungsanlage auf eine Lüfter-Antriebseinheit mit einem kleineren motorseitigen Antriebsrad kann, bei einer vorgegebenen oder bestimmten Drehzahl des Lüfters bzw. des nicht ausgetauschten lüfterseitigen Antriebsrades, der Synchronmotor mit einer höheren Drehzahl betrieben werden. Dies führt, wie bereits vorstehend erläutert, auf vorteilhafte Weise zu einer Erhöhung der Motor-Effizienz und damit zu einer besseren Energie-Effizient der modernisierten Lüftungsanlage.

Es wird darauf hingewiesen, dass Ausführungsformen der Erfindung mit Bezug auf unterschiedliche Erfindungsgegenstände beschrieben wurden. Insbesondere sind einige Ausführungsformen der Erfindung mit Vorrichtungsansprüchen und andere Ausführungsformen der Erfindung mit Verfahrensansprüchen beschrieben. Dem Fachmann wird jedoch bei der Lektüre dieses Dokuments sofort klar werden, dass, sofern nicht explizit anders angegeben, zusätzlich zu einer Kombination von Merkmalen, die zu einem Typ von Erfindungsgegenstand gehören, auch eine beliebige Kombination von Merkmalen möglich ist, die zu unterschiedlichen Typen von Erfindungsgegenständen gehören.

Weitere Vorteile und Merkmale der vorliegenden Erfindung ergeben sich aus der folgenden beispielhaften Beschreibung derzeit bevorzugter Ausführungsformen. Die einzelnen Figuren der Zeichnung dieses Dokuments sind lediglich als schematisch und als nicht maßstabsgetreu anzusehen.

### Kurze Beschreibung der Zeichnung

Figur 1 zeigt eine Lüftungsanlage mit exemplarisch einem einzigen Lüfter, der von einer Antriebseinheit gemäß einem Ausführungsbeispiel der Erfindung über einen Riemen angetrieben wird.
Figur 2 zeigt für eine Antriebseinheit eine elektrische Schaltung zum Ausgeben eines Drehzahl-Steuersignals basierend auf einer Stromdetektion.
Figur 3 zeigt für eine Antriebseinheit eine elektrische Schaltung zum Ausgeben eines Drehzahl-Steuersignals basierend auf einer Spannungsdetektion.

### Detaillierte Beschreibung

Es wird darauf hingewiesen, dass in der folgenden detaillierten Beschreibung Merkmale bzw. Komponenten von unterschiedlichen Ausführungsformen, die mit den entsprechenden Merkmalen bzw. Komponenten von einer anderen Ausführungsform nach gleich oder zumindest funktionsgleich sind, mit den gleichen Bezugszeichen oder mit Bezugszeichen versehen sind, welche in den letzten beiden Ziffern identisch sind mit den Bezugszeichen von entsprechenden gleichen oder zumindest funktionsgleichen Merkmalen bzw. Komponenten. Zur Vermeidung von unnötigen Wiederholungen werden bereits anhand einer vorher beschriebenen Ausführungsform erläuterte Merkmale bzw. Komponenten an späterer Stelle nicht mehr im Detail erläutert.

Ferner wird darauf hingewiesen, dass die nachfolgend beschriebenen Ausführungsformen lediglich eine beschränkte Auswahl an möglichen Ausführungsvarianten der Erfindung darstellen. Insbesondere ist es möglich, die Merkmale einzelner Ausführungsformen in geeigneter Weise miteinander zu kombinieren, so dass für den Fachmann mit den hier explizit dargestellten Ausführungsvarianten eine Vielzahl von verschiedenen Ausführungsformen als offensichtlich offenbart anzusehen sind.

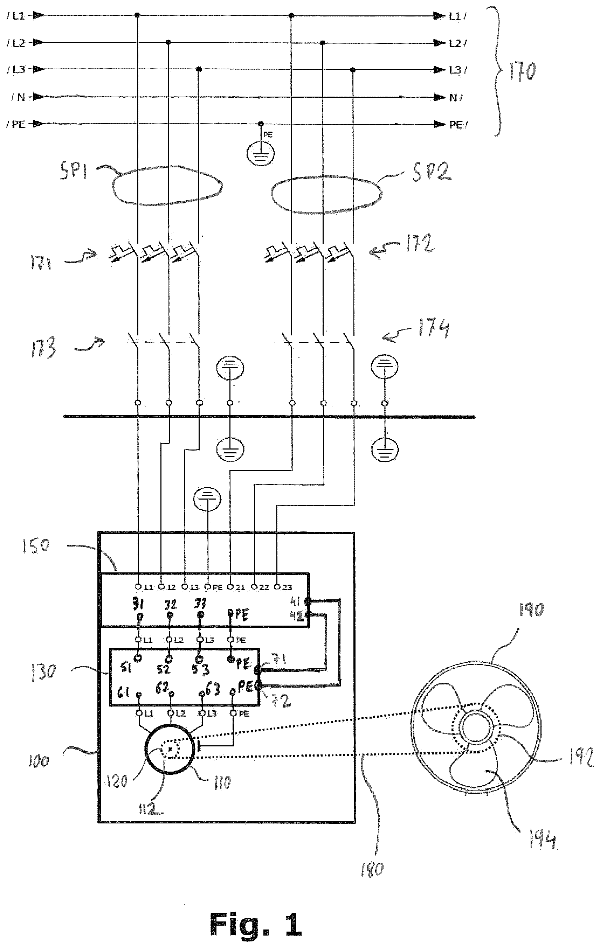

**Figur 1** zeigt eine Lüftungsanlage gemäß einem Ausführungsbeispiel der Erfindung. Die Lüftungsanlage hat mehrere Lüfter, wobei aus Gründen der Übersicht lediglich ein einziger Lüfter 190 und dessen Antriebseinheit 100 dargestellt ist.

Die Antriebseinheit 100 umfasst einen Synchronmotor 110. Der Synchronmotor 110 weist eine Antriebswelle 112 auf, an welcher ein motorseitiges Antriebsrad 120 angebracht ist. Der Lüfter 190 weist ein Flügelrad 194 auf. Ein lüfterseitiges Antriebsrad 192 ist mit dem Flügelrad 194 verbunden. Eine mechanische Kraftübertragung zwischen dem von dem Synchronmotor 110 angetriebenen motorseitigen Antriebsrad 120 und dem lüfterseitigen Antriebsrad 192 erfolgt mittels einem mechanischen Koppelelements 180, welches als ein Riemen 180 ausgebildet ist.

Die Leistungsversorgung der Antriebseinheit 100 erfolgt von einem Versorgungsnetz 170, welches über zwei parallele Strompfade, einem ersten Strompfad SP1 und einem zweiten Strompfad SP2, mit der Antriebseinheit 100 verbunden ist. Das elektrische Versorgungsnetz 170 ist ein übliches Drehstromnetz, welches neben den drei elektrischen Phasen L1, L2 und L3 noch einen neutrale Phase N sowie eine Erdung PE aufweist.

Die Antriebseinheit 100 weist einen Frequenzumrichter 130 auf, welcher den Synchronmotor 110 mit einem Drehstrom mit einer bestimmten Frequenz versorgt. Der Drehstrom wird dem Synchronmotor über einen Frequenzumrichter-Leistungsausgang mit drei Anschlüssen 61, 62 und 63 zugeführt. Eingangsseitig ist der Frequenzumrichter 130 über einen Frequenzumrichter-Leistungseingang mit drei Anschlüssen 51, 52 und 53 mit einem Leistungsausgang einer elektrischen Schaltung 150 verbunden. Der Leistungsausgang der elektrischen Schaltung 150 umfasst drei Anschlüsse 31, 32 und 33. Die elektrische Schaltung 150 umfasst ferner zwei Leistungseingänge, einen ersten Leistungseingang mit elektrischen Anschlüssen 11, 12 und 13 sowie einen zweiten Leistungseingang mit elektrischen Anschlüssen 21, 22 und 23.

Die elektrische Schaltung 150, welche auch als eine Auswahlschaltung bezeichnet werden kann, sorgt gemäß dem hier dargestellten Ausführungsbeispiel dafür, dass in einem ersten Betriebszustand elektrische Leistung, welche über den ersten Strompfad SP1 an den elektrischen Anschlüssen 11, 12 und 13 zugeführt wird, über die elektrischen Anschlüsse 31, 32 und 33 ihres Leistungsausgangs an den Frequenzumrichter 130 und letztendlich an den Synchronmotor 110 transferiert wird. In entsprechender Weise wird in einem zweiten Betriebszustand elektrische Leistung, welche über den zweiten Strompfad SP2 an den elektrischen Anschlüssen 21, 22 und 23 zugeführt wird, über die elektrischen Anschlüsse 31, 32 und 33 des Leistungsausgangs an den Frequenzumrichter 130 und letztendlich an den Synchronmotor 110 transferiert.

Die elektrische Schaltung 150 ist derart konfiguriert, dass bei einem Empfang von elektrischer Leistung über den ersten Strompfad SP1 (erster Betriebszustand) über einen Steuerausgang mit elektrischen Kontakten 41 und 42 ein erstes Drehzahl-Steuersignal ausgegeben wird. Dieses erste Drehzahl-Steuersignal wird einem Steuereingang des Frequenzumrichters 130 zugeführt. Der Steuereingang des Frequenzumrichters 130 umfasst gemäß dem hier dargestellten Ausführungsbeispiel zwei elektrische Kontakte 71 und 72. Das erste Drehzahl-Steuersignal veranlasst den Frequenzumrichter 130, den Synchronmotor 110 derart anzusteuern, dass dieser mit einer ersten Drehzahl betrieben wird.

In entsprechender Weise wird bei einem Empfang von elektrischer Leistung über den zweiten Strompfad SP2 (zweiter Betriebszustand) über den Steuerausgang (mit den elektrischen Kontakten 41, 42) ein zweites Drehzahl-Steuersignal ausgegeben. Dieses zweite Drehzahl-Steuersignal wird dem Frequenzumrichter 130 über dessen Steuereingang (mit den elektrischen Kontakten 71, 72) zugeführt. Das zweite Drehzahl-Steuersignal veranlasst den Frequenzumrichter 130, den Synchronmotor 110 derart anzusteuern, dass dieser mit einer zweiten Drehzahl betrieben wird, welche unterschiedlich ist zu der ersten Drehzahl.

Es wird erneut darauf hingewiesen, dass eines der beiden Drehzahl-Steuersignale auch ein Nullsignal sein kann. Dieses Nullsignal kann ein Signal mit dem Spannungs- und/oder Stromwert Null sein. Alternativ kann das Nullsignal auch ein sog. floating Signal ohne einen definierten Signalpegel sein. Entscheidend dabei ist lediglich, dass auch dieses Nullsignal den Frequenzumrichter 130 dazu veranlasst, den Synchronmotor 110 mit der entsprechenden Drehzahl zu betreiben.

Die Leistungszuführung spezifisch über einen der beiden Strompfade SP1 und SP2 stellt also bei dem hier beschriebenen Ausführungsbeispiel eine Drehzahlcodierung für den Synchronmotor 110 dar. Um für die Leistungsübertragung jeweils einen der beiden Strompfade SP1 und SP2 auszuwählen, sind Stromschalter 173 und 174 vorgesehen. Die Stromschalter 173, 174 weisen jeweils drei Schaltelemente auf. Jedes Schaltelement ist genau einer elektrischen Phase des Drehstrom-Versorgungsnetzes 170 zugeordnet. Wie aus Figur 1 ersichtlich, ist der Stromschalter 173 dem ersten Strompfad SP1 zugeordnet und der Stromschalter 174 ist dem zweiten Strompfad SP2 zugeordnet. Gemäß dem hier dargestellten Ausführungsbeispiel wird die Lüftungsanlage derart betrieben, dass immer nur einer der beiden Strompfade SP1 und SP2 für eine elektrische Leistungsübertragung verwendet wird.

Ergänzend sei darauf hingewiesen, dass zur Erfüllung von Sicherheitsvorschriften in jedem der beiden Strompfade SP1 und SP2 noch ein Motorschutzschalter 171 bzw. einer 172 geschaltet ist. Die Motorschutzschalter 171, 172 sorgen lösen dann aus und sorgen für eine Unterbrechung des Leistungsflusses, wenn der Strom durch den Synchronmotor einen bestimmten sicherheitsrelevanten Maximalwert überschreitet.

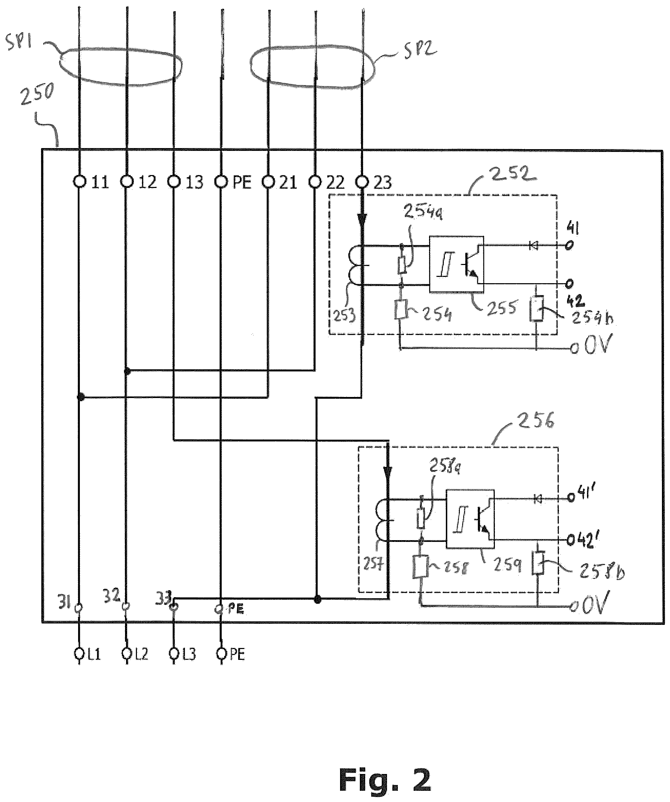

Es wird darauf hingewiesen, dass bei anderen Ausführungsformen eine dritte Drehzahl, welche unterschiedlich ist sowohl zu der ersten Drehzahl als auch zu der zweiten Drehzahl, dadurch codiert werden kann, dass eine Leistungsversorgung über beide Strompfade SP1 und SP2 erfolgt. Dafür müssen beide Stromschalter 173 und 174 gleichzeitig geschlossen sein, so dass sich der insgesamt zugeführte Strom auf beide Strompfade SP1 und SP2 zumindest annähernd gleichmäßig verteilt. Diese zumindest annähernd gleichmäßige Stromverteilung ergibt sich daraus, dass jeder der beiden Motorschutzschalter 171, 172 zur Feststellung eines Überstroms einen gegenüber den Stromleitungen der beiden Strompfade SP1 und SP2 relativ großen elektrischen Widerstand darstellt. Deshalb kann beispielsweise bei einer nachfolgend anhand von Figur 2 beschriebenen Stromsteuerung der elektrischen (Auswahl-) Schaltung 150 das gleichzeitige Schließen von den beiden Stromschaltern 173 und 174 detektiert und die dritte Drehzahl angesteuert werden.

**Figur 2** zeigt für eine Antriebseinheit eine elektrische Schaltung 250 zum Ausgeben eines Drehzahl-Steuersignals basierend auf einer Stromdetektion. Die elektrische Schaltung 250 kann für eine Realisierung der in Figur 1 dargestellten elektrischen Schaltung 150 verwendet werden. Demensprechend weist auch die elektrische Schaltung 250 mit den Anschlüssen 11, 12 und 13 einen ersten Leistungseingang für den ersten Strompfad SP1, mit den Anschlüssen 21, 22 und 23 einen zweiten Leistungseingang für den zweiten Strompfad SP2 und mit den Kontakten 41 und 42 einen Drehzahl-Steuerausgang auf.

Wie aus Figur 2 ersichtlich, weist die elektrische Schaltung 250 eine Strom-Sensoreinrichtung 252 auf, welche gemäß dem hier dargestellten Ausführungsbeispiel derart konfiguriert und angeordnet ist, dass sie einen Stromfluss detektiert, welcher über den zweiten Strompfad SP2 und konkret über die dritte Drehstromphase des zweiten Strompfades SP2 über den elektrischen Anschluss 23 zugeführt wird. Die Strom-Sensoreinrichtung 252 ist eine induktive Strom-Sensoreinrichtung, welche eine Messspule 253 und eine der Messspule 253 nachgeschaltete Auswerteelektronik 255 aufweist, deren Ausgang mit den Kontakten 41 und 42 verbunden ist. Gemäß dem hier dargestellten Ausführungsbeispiel umfasst die Auswerteelektronik 255 eine Komparator-Schaltung mit einem "Open Kollektor Ausgang" und eine ausgangsseitige Diode.

Mit der Strom-Sensoreinrichtung 252 wird ein Stromfluss in einer dem elektrischen Kontakt 23 zugeordneten Leitung detektiert und damit erkannt, dass die Leistungsversorgung über den zweiten Strompfad SP2 erfolgt. Die Strom-Sensoreinrichtung 252 signalisiert dann an ihrem Ausgang 41, 42 dem in Figur 2 nicht dargestellten Frequenzumrichter die zweite Drehzahl. Falls die Strom-Sensoreinrichtung 252 keine Leistungszuführung über den zweiten Strompfad SP2 detektiert, dann liegt an dem Ausgang 41, 42 je nach konkreter Ausführung der Auswerteelektronik 255 entweder kein Signal, ein Nullsignal oder ein "floating" Signal an, welches dem Frequenzumrichter zugeführt wird und diesem signalisiert, dass der in Figur 2 ebenfalls nicht dargestellte Synchronmotor mit der ersten Drehzahl betrieben werden soll.

Ferner weist gemäß dem hier dargestellten Ausführungsbeispiel die Strom-Sensoreinrichtung 252 noch einen ohmschen Widerstand 254 auf, der eine Leitung der Messspule mit dem Bezugspotential verbindet. Gemäß dem hier dargestellten Ausführungsbeispiel ist das Bezugspotential 0 V. Der ohmsche Widerstand 254 bewirkt ebenso wie ein alternativ oder in Kombination möglicher Kondensator (insbesondere auch ein R-C Glied) eine Signalglättung, welche insbesondere bei einem Betriebsumfeld mit starken elektromagnetischen Störsignalen zu einer erhöhten Betriebssicherheit führt. Es wird darauf hingewiesen, dass alternativ oder in Kombination ein solches Bauelement zur Signalglättung auch ausgangsseitig der Strom-Sensoreinrichtung 252 beispielsweise zwischen dem elektrischen Kontakt 42 und Bezugspotential geschaltet werden kann. Gemäß dem hier dargestellten Ausführungsbeispiel hat der ohmsche Widerstand 254 einen Widerstandswert von 10 kOhm. Die beiden Widerstände 254a bzw. 254b stellen alternative und/oder optionale Möglichkeiten für die beschriebene Signalglättung dar.

Figur 2 zeigt ferner eine optionale zusätzliche Strom-Sensoreinrichtung 256. Diese Strom-Sensoreinrichtung 256 detektiert eine Leistungszufuhr über den ersten Strompfad SP1 und konkret einen Stromfluss über die dritte Drehstromphase des ersten Strompfades SP1 über den elektrischen Anschluss 13. Die zusätzliche Strom-Sensoreinrichtung 256 ist genauso aufgebaut wie die Strom-Sensoreinrichtung 252 und weist dementsprechend eine Messspule 257, eine Auswerteelektronik 259 und einen ohmschen Widerstand 258 zur Signalglättung auf. Ferner können zusätzlich optionale Widerstände 258a bzw. 258b eine ggf. verbesserte Signalglättung bewirken.

Elektrische Kontakte des entsprechenden Drehzahl-Steuerausgangs der zusätzlichen Strom-Sensoreinrichtung 256 sind in Figur 2 mit den Bezugszeichen 41' und 42' versehen.

Die optionale zusätzlichen Strom-Sensoreinrichtung 256 kann dem Frequenzumrichter anhand eines zusätzlichen Drehzahl-Steuersignals an den beiden Kontakten 41' und 42' aktiv eine Leistungszuführung über den zweiten Strompfad SP2 signalisieren und damit die erste Drehzahl "anfordern". Das entsprechende zusätzliche Drehzahl-Steuersignal ist damit redundant zu dem vorstehend genannten fehlenden Signal, Nullsignal oder "floating Signal" an den beiden Kontakten 41 und 42 der Strom-Sensoreinrichtung 252.

Bei einer anderen Ausführungsform kann die zusätzliche Strom-Sensoreinrichtung 256 an dem ersten Strompfad SP1 zusammen mit der Strom-Sensoreinrichtung 252 an dem zweiten Strompfad SP2 auch detektieren, dass über beide Strompfade SP1 und SP2 elektrische Leistung zugeführt wird. Bei sowohl einem geschlossenen Schalter 173 als auch einem geschlossenen Schalter 174 verteilt sich nämlich aufgrund von vergleichsweise großen Übergangs- oder Heizwiderständen der beiden thermischen Motorschutzschalter 171, 172 der insgesamt von dem Versorgungsnetz 170 zugeführte Strom zumindest annähernd gleich auf beide Strompfade SP1 und SP2.

Eine Stromdetektion sowohl durch die Strom-Sensoreinrichtung 252 als auch durch die zusätzliche Strom-Sensoreinrichtung 256 kann bei anderen Ausführungsformen dazu verwendet werden, über zwei entsprechende Drehzahl-Steuersignale dem Frequenzumrichter eine dritte Drehzahl zu signalisieren. Selbstverständlich muss in diesem Fall der Frequenzumrichter entsprechende Drehzahl-Steuereingänge und eine die beiden Drehzahl-Steuersignale verarbeitende Logikschaltung aufweisen.

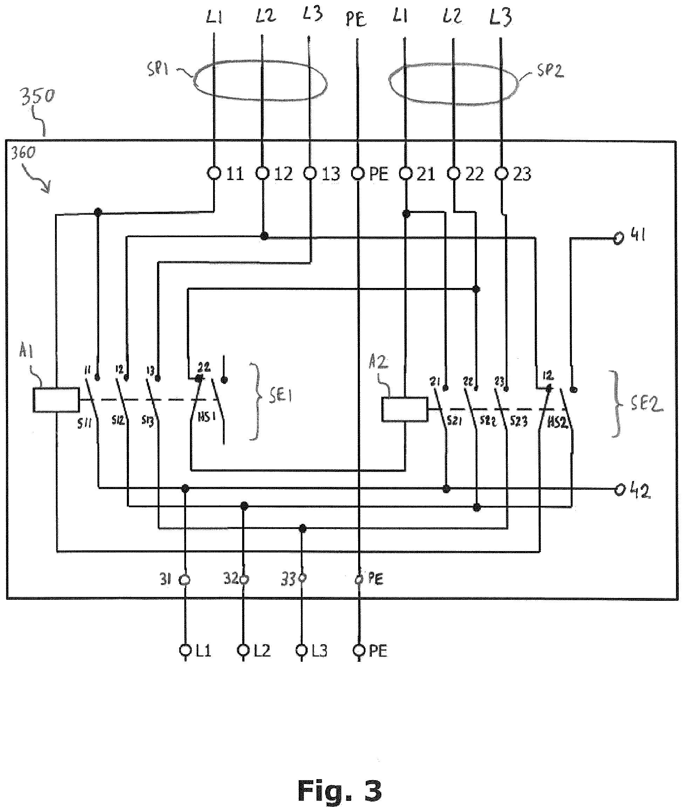

**Figur 3** zeigt für eine Antriebseinheit eine elektrische Schaltung 350 zum Ausgeben eines Drehzahl-Steuersignals basierend auf einer Spannungsdetektion. Auch die elektrische Schaltung 350 kann für eine Realisierung der in Figur 1 dargestellten elektrischen Schaltung 150 verwendet werden.

Die elektrische Schaltung 350 weist eine Spannung-Sensoreinrichtung 360 auf, welche zwischen (a) den eingangsseitigen elektrischen Anschlüssen 11, 12 und 13 für den ersten Strompfad SP1 bzw. den eingangsseitigen elektrischen Anschlüssen 21, 22 und 23 für den zweiten Strompfad SP2 und (b) den ausgangsseitigen elektrischen Anschlüssen 31, 32 und 33 für den Leistungsausgang der elektrischen Schaltung 350 geschaltet ist. Eine Masseleitung PE wird durch die elektrische Schaltung "durchgeschleift".

Die Spannung-Sensoreinrichtung 360 umfasst zwei jeweils als ein als Relais ausgebildete steuerbare Schaltungseinrichtungen, eine erste steuerbare Schaltungseinrichtung SE1 und eine zweite steuerbare Schaltungseinrichtung SE2.

Gemäß dem hier dargestellten Ausführungsbeispiel weist die erste steuerbare Schaltungseinrichtung SE1 auf (i) einen ersten magnetische Aktuator A1 (mit einer Spule zum Detektieren eines Stromflusses), (ii) drei erste Schalter S11, S12 und S13 sowie (iii) einen ersten Hilfsschalter HS1. Der erste Hilfsschalter HS1 weist zwei Schaltelemente auf, die im Gleichtakt geöffnet bzw. geschlossen werden. Wie aus Figur 3 ersichtlich, verbindet ein linkes Schaltelement (im geschlossenen Schaltzustand) den elektrischen Anschluss 22 mit einem nachstehend beschriebenen magnetischen Aktuator A2 der zweiten steuerbaren Schaltungseinrichtung SE2. Das rechte Schaltelement des ersten Hilfsschalters HS1 hat in der ersten steuerbaren Schaltungseinrichtung SE1 keine Funktion.

In einem dargestellten ersten Betriebszustand, in dem kein Strom durch den ersten magnetischen Aktuator A1 fließt, sind die drei ersten Schalter S11, S12 und S13 geöffnet und das (relevante) linke Schaltelement des ersten Hilfsschalters HS1 ist geschlossen. In einem zweiten Betriebszustand, in dem ein von Null verschiedener Strom durch den ersten magnetischen Aktuator A1 fließt, sind die drei ersten Schalter S11, S12 und S13 geschlossen und das (relevante) linke erste Schaltelement des ersten Hilfsschalters HS1 ist geöffnet.

In entsprechender Weise weist bei dem hier dargestellten Ausführungsbeispiel die zweite steuerbare Schaltungseinrichtung SE2 auf (i) den o.g. zweiten magnetischen Aktuator A2 (ebenfalls mit einer Spule zum Detektieren eines Stromflusses), (ii) drei zweite Schalter S21, S22 und S23 sowie (iii) einen zweiten Hilfsschalter HS2. Auch der zweite Hilfsschalter HS2 weist zwei Schaltelemente auf, die im Gleichtakt geöffnet bzw. geschlossen werden. Wie aus Figur 3 ersichtlich, verbindet das linke Schaltelement des zweiten Hilfsschalters HS2 (im geschlossenen Schaltzustand) den elektrischen Anschluss 12 mit dem ersten magnetischen Aktuator A1 der ersten steuerbaren Schaltungseinrichtung SE1. Das rechte Schaltelement des zweiten Hilfsschalters HS2 verbindet (im nicht dargestellten geschlossenen Schaltzustand) den elektrischen Kontakt 41 des Drehzahl-Steuerausgangs mit dem elektrischen Anschluss 32 des Leistungsausgangs der elektrischen Schaltung 350.

In einem dargestellten ersten Betriebszustand der zweiten steuerbaren Schaltereinrichtung SE2, in dem kein Strom durch den zweiten magnetischen Aktuator A2 fließt, sind die drei zweiten Schalter S21, S22 und S23 geöffnet, das linke Schaltelement des zweiten Hilfsschalters HS2 ist geschlossen und das rechte Schaltelement des zweiten Hilfsschalters HS2 ist geöffnet. In einem zweiten Betriebszustand der zweiten steuerbaren Schaltereinrichtung SE2, in dem ein von Null verschiedener Strom durch den zweiten magnetischen Aktuator A2 fließt, sind die drei zweiten Schalter S21, S22 und S23 geschlossen, das linke Schaltelement des zweiten Hilfsschalters HS2 ist geöffnet und das rechte Schaltelement des zweiten Hilfsschalters HS2 ist geschlossen.

Nachfolgend wird unter der Voraussetzung, dass eine Leistungszuführung entweder über den ersten Strompfad SP1 oder alternativ über den zweiten Strompfad SP2 erfolgt, die Funktionsweise der elektrischen Schaltung 350 erläutert. Die Funktion besteht dabei erneut darin, (i) den "aktiven" Strompfad, der für die Leistungszuführung verwendet wird, zu erkennen, (ii) die zugeführte elektrische Leistung an die elektrischen Anschlüsse 31, 32 und 33 des Leistungsausgang weiterzuleiten und (iii) die durch die selektive Leistungszuführung codierte Drehzahlanforderung an den nicht dargestellten Frequenzumrichter zu signalisieren. Die folgende Erläuterung geht davon aus, dass zu Beginn keine Leistungszuführung erfolgt, weder über den ersten Strompfad SP1 noch über den zweiten Strompfad SP2.

### (A) Leistungszuführung über ersten Strompfad SP1

Wenn eine Leistung über den ersten Strompfad SP1 zugeführt wird, dann fließt zunächst ein Strom über (i) den elektrischen Anschluss 11, (ii) den ersten magnetischen Aktuator A1 und (iii) das geschlossene linke Schaltelement des zweiten Hilfsschalters HS2 zu dem elektrischen Anschluss 12. Dieser Strom kann, wie aus der nachfolgenden Beschreibung ersichtlich, als ein Aktivierungsstrom für die erste steuerbare Schaltereinrichtung SE1 angesehen werden. Dieser Aktivierungsstrom fließt zwischen zwei unterschiedlichen Phasen des über den ersten Strompfad SP1 zugeführten Drehstromes.

Der Aktivierungsstrom veranlasst den ersten Aktuator A1 der ersten steuerbaren Schaltereinrichtung SE1, die Schaltzustände der ersten Schalter S11, S12, S13 sowie des ersten Hilfsschalters HS1 zu ändern, so dass die ersten Schalter S11, S12, S13 geschlossen sind und das linke Schaltelement des ersten Hilfsschalters HS1 geöffnet ist.

Mit dem Öffnen des linken Schaltelements des ersten Hilfsschalters HS1 ist ein Stromfluss durch den zweiten Aktuator A2 unterbunden und die zweite Schaltereinrichtung SE2 verbleibt in ihrem Ausgangszustand, wie in Figur 3 dargestellt. Dabei ist das rechte Schaltelement des zweiten Hilfsschalters HS2 geöffnet und an dem elektrischen Kontakt 41 liegt kein Signal bzw. ein nicht definiertes "floating" Signal an. Dies signalisiert dem nicht dargestellten Frequenzumrichter eine Drehzahlanforderung mit der ersten Drehzahl.

### (B) Leistungszuführung über zweiten Strompfad SP2

Wenn alternativ eine Leistung über den zweiten Strompfad SP2 zugeführt wird, dann fließt gemäß dem hier dargestellten Ausführungsbeispiel zunächst ein Strom über (i) den elektrischen Anschluss 21, (ii) den zweiten magnetischen Aktuator A2 und (iii) das geschlossene linke Schaltelement des ersten Hilfsschalters HS1 zu dem elektrischen Anschluss 22. Auch dieser Strom kann als ein Aktivierungsstrom (nun) für die zweite steuerbare Schaltereinrichtung SE2 angesehen werden. Dieser Aktivierungsstrom fließt zwischen zwei unterschiedlichen Phasen des über den zweiten Strompfad SP2 zugeführten Drehstromes.

Dieser Aktivierungsstrom veranlasst den zweiten Aktuator A2 der zweiten steuerbaren Schaltereinrichtung SE2, die Schaltzustände der zweiten Schalter S21, S22, S23 sowie des zweiten Hilfsschalters HS2 zu ändern, so dass die zweiten Schalter S21, S22, S23 geschlossen sind, das linke Schaltelement des zweiten Hilfsschalters HS2 geöffnet ist und das rechte Schaltelement des zweiten Hilfsschalters HS2 geschlossen ist.

Damit wird ein Stromfluss durch den ersten Aktuator A1 unterbunden und die erste Schaltereinrichtung SE1 verbleibt in ihrem Ausgangszustand, wie in Figur 3 dargestellt. Da ferner das rechte Schaltelement des zweiten Hilfsschalters HS2 geschlossen ist, liegt an dem elektrischen Kontakt 41 ein Wechselspannungssignal an, welches der Spannung der zweiten Phase des Drehstroms an dem elektrischen Kontakt 22 entspricht und welches dem nicht dargestellten Frequenzumrichter eine Drehzahlanforderung mit der zweiten Drehzahl signalisiert.

Im Folgenden werden ohne Bezugnahme auf eine der Figuren noch ein paar weitere Aspekte der in diesem Dokument beschriebenen Technologie erläutert:
Ein Frequenzumrichter besteht typischerweise aus einem AC/DC Wandler und einem nachgeschalteten DC/AC Wandler. Zwischen den beiden Wandlern befindet sich ein sog. Gleichstrom-Zwischenkreis mit einem Kondensator. Dieser Kondensator, der insbesondere zur Glättung des durch den AC/DC Wandler ausgegebenen Gleichspannungssignals vorgesehen ist, kann auch elektrische Energie speichern. Auch ohne jegliche Leistungszuführung kann dadurch der Synchronmotor noch für eine gewisse kurze Zeit weiter mit Strom versorgt werden.

Die vorstehend anhand von Figur 2 beschriebene Stromdetektion stellt jedoch sofort ein Öffnen eines der Schalter 173 bzw. 174 fest. Die vorstehend anhand von Figur 3 beschriebene Spannungsdetektion stellt ein Öffnen eines der Schalter 173 bzw. 174 mit einer geringen zeitlichen Verzögerung fest. Diese Verzögerung hängt von der Dimensionierung der Relais SE1 und SE2 ab.

Mit der sofortigen oder zumindest sehr schnellen Erkennung eines Öffnens eines Schalters 173, 174 können beispielsweise durch eine entsprechende Programmierung einer Steuerung des Frequenzumrichters geeignete Maßnahmen eingeleitet werden, welche eine Schonung des in Figur 1 dargestellten Riemenantriebs bewirken. Dazu zählt neben einer Reduzierung der Änderungsgeschwindigkeit der Frequenz des an den Synchronmotor ausgegebenen Drehstroms auch ein gezieltes (sanftes) Bremsen des Synchronmotors durch das Zuschalten von zumindest einem elektrischen Bremswiderstand zwischen zwei Phasen des den Synchronmotor antreibenden Drehstroms.

Ein solcher besonders riemenschonender Betrieb ist bei herkömmlichen Antriebsvorrichtungen ohne Frequenzumrichter nicht möglich. Herkömmliche Antriebsvorrichtungen werden nämlich bei einem Drehzahlwechsel betrieben mit fest eingestellten Verzögerungszeiten zwischen einem Schalten von einem ersten Stromzuführungsschalter, der dem ersten Strompfad zugeordnet ist, und dem Schalten eines zweiten Stromzuführungsschalters, der dem zweiten Strompfad zugeordnet ist. Dabei sind bei einem Drehzahlwechsel, veranlasst durch ein Öffnen des einen Schalters und nachfolgend durch ein Schließen des anderen Schalters, in der dazwischen liegenden Zeitspanne beide Stromzuführungsschalter geöffnet, so dass es keine Leistungszuführung gibt. In dieser Zeitspanne läuft der Motor "aus", d.h. die Drehzahl von Lüfter und Motor reduziert sich abhängig von der mechanischen "Luftlast" und Systemreibungen, welche beide bereits eine Belastung für den Riemen darstellen. Wenn dann wieder ein Schalter geschlossen wird, läuft bei herkömmlichen Antriebsvorrichtungen der Motor mit aller verfügbaren Leistung auf die Solldrehzahl hoch. Auch dies belastet den Riemenantrieb stärker als nötig.

Durch die Verwendung eines Frequenzumrichters und durch Ausnutzung seiner Energiespeicherfähigkeit (durch den Zwischenkreiskondensator) ist es z.B. möglich, im Rahmen einer Drehzahl-Reduzierung sofort beim Öffnen eines Stromzuführungsschalters und innerhalb einer Zeitspanne ohne Leistungszuführung von dem Versorgungsnetz mit einer leichten Bremsung zu beginnen (und bei einem bekanntem Abbrems-Zeitverhalten den Synchronmotor zum Wiedereinschaltzeitpunkt bereits auf der Solldrehzahl zu halten). Im Rahmen einer Drehzahl-Erhöhung kann es innerhalb der Zeitspanne ohne eine Leistungszuführung möglich sein, durch Ausnutzung der Energiespeicherfähigkeit (i) das Reduzieren der Drehzahl zu verlangsamen, (ii) die Drehzahl zu halten oder sogar (iii) die Drehzahl geringfügig zu erhöhen. Dadurch ist auch bei Drehzahlerhöhungen ein riemenschonender Übergang auf die neue Drehzahl möglich und der Verschleiß des Riemens wird reduziert.

Wie bereits vorstehend erläutert, können nachgerüstete hocheffiziente Synchronmotoren, die von einem Frequenzumrichter mit einem Drehstrom mit einer relativ hohen Frequenz betrieben werden, ein kleineres motorseitiges Antriebsrad aufweisen als die Elektromotoren von einer herkömmlichen im Rahmen einer Modernisierung ausgetauschten Antriebsvorrichtung. Dies führt naturgemäß am motorseitigen Antriebsrad zu einer Riemenumlenkung mit einem geringeren Biegeradius und damit zu einer höheren Belastung des Riemens des Riemenantriebs. Da jedoch die Drehzahl-Umschaltgeschwindigkeiten von alten Antriebsvorrichtungen auf deren größere Antriebsräder ausgerichtet ist, ist es angezeigt, dass gegenüber den alten Antriebsvorrichtungen die Drehzahl noch langsamer geändert wird. Eine solche Reduzierung von Drehzahländerungen kann jedoch problemlos mit dem Frequenzumrichter realisiert werden, der von der in diesem Dokument beschriebenen elektrischen Schaltung mit Leistung versorgt und über das Drehzahl-Steuersignal angesteuert wird. Mathematisch ausgedrückt gilt: Auch wenn bereits die erste Ableitung der Geschwindigkeit bzw. der Drehzahl (entspricht der Winkelbeschleunigung der Antriebsräder) im Sinne eines sanften Betriebs gering ist und weitgehend konstant gehalten wird, kann auch die zweite Ableitung der Geschwindigkeit (was dann der Geschwindigkeit der Beschleunigungsänderung entspricht) gering gehalten werden. Dies trägt zusätzlich zur Reduktion der Riemenbelastung bei

Allgemein kann festgehalten werden, dass mit dem Frequenzumrichter und dessen Energiespeicherfähigkeit unterschiedliche Beschleunigungen zwischen Hochlauf, Bremsen und Auslaufenlassen des Lüfters realisiert werden können. Gerade durch das Bremsen bei einem gewünschten Drehzahlwechsel können abrupte Übergänge von Verzögern zu Beschleunigen verhindert werden. Solche Sprungantworten (Übergang von Beschleunigen zu Verzögern bzw. Bremsen) sind oft mit Schwingungen im dynamischen System einer Antriebsvorrichtung bzw. Antriebseinheit verbunden, so dass der Riemenantrieb zusätzlich beansprucht wird. Durch eine gezielte Ansteuerung des energiespeichernden Frequenzumrichters im Sinne einer regeltheoretischen Übergangsmaßnahme kann eine solche zusätzliche Beanspruchung des Riemenantriebs auf effiziente Weise reduziert werden.

Es wird angemerkt, dass der Begriff "aufweisen" nicht andere Elemente ausschließt und dass das "ein" nicht eine Mehrzahl ausschließt. Auch können Elemente, die in Zusammenhang mit unterschiedlichen Ausführungsbeispielen beschrieben sind, kombiniert werden. Es sollte auch angemerkt werden, dass Bezugszeichen in den Ansprüchen nicht als den Schutzbereich der Ansprüche beschränkend ausgelegt werden sollen.

### BEZUGSZEICHEN:

- 100: Antriebseinheit
- 110: Synchronmotor
- 112: Antriebswelle
- 120: motorseitiges Antriebsrad
- 130: Frequenzumrichter
- 51, 52, 53: elektrische Anschlüsse von Leistungseingang Frequenzumrichter
- 61, 62, 63: elektrische Anschlüsse von Leistungsausgang Frequenzumrichter
- 71, 72: elektrische Kontakte von Steuereingang Frequenzumrichter
- 150: elektrische Schaltung
- 11, 12, 13: elektrische Anschlüsse von erstem Leistungseingang
- 21, 22, 23: elektrische Anschlüsse von zweitem Leistungseingang
- 31, 32, 33: elektrische Anschlüsse von Leistungsausgang
- 41, 42: elektrische Kontakte von Drehzahl-Steuerausgang
- 170: Versorgungsnetz
- 171, 172: Motorschutzschalter
- 173, 174: Stromschalter
- 180: mechanisches Koppelelement / Riemen
- 190: Lüfter
- 192: lüfterseitiges Antriebsrad
- 194: Flügelrad

- L1, L2, L3: Drehstromleitungen / Drehstromphasen
- N: Neutralleiter
- PE: Erdung
- SP1: erster Strompfad
- SP2: zweiter Strompfad
- 250: elektrische Schaltung (Stromsteuerung)
- 252, 256: Strom-Sensoreinrichtung
- 253, 257: Messspule
- 254, 258: Bauelement zur Signalglättung / ohmscher Widerstand
- 254a, 258a: Bauelement zur Signalglättung / ohmscher Widerstand
- 254b, 258b: Bauelement zur Signalglättung / ohmscher Widerstand
- 255, 259: Auswerteelektronik
- 41', 42': weiterer Drehzahl-Steuerausgang

- 350: elektrische Schaltung (Spannungssteuerung)
- 360: Spannung-Sensoreinrichtung

- SE1: erste steuerbare Schaltereinrichtung / erstes Relais
- SE2: zweite steuerbare Schaltereinrichtung / zweites Relais
- A1: erster magnetischer Aktuator
- A2: zweiter magnetischer Aktuator
- S11, S12, S13: erste Schalter
- S21, S22, S23: zweite Schalter
- HS1: erster Hilfsschalter (mit zwei Schaltelementen)
- HS2: zweiter Hilfsschalter (mit zwei Schaltelementen)

## Patentansprüche

1. Antriebseinheit (100) für einen Lüfter (190) einer stationären Lüftungsanlage für ein Gebäude, die Antriebseinheit (100) aufweisend
einen permanenterregten Synchronmotor (110) mit einer Antriebswelle (112);
ein motorseitiges Antriebsrad (120), welches mit der Antriebswelle (112) gekoppelt ist und konfiguriert ist, über ein zumindest teilweise elastisches mechanisches Koppelelement (180) den Lüfter (190) anzutreiben;
einen Frequenzumrichter (130) zum Versorgen des Synchronmotors (110) mit einer Wechselspannung mit einer vorgegebenen Frequenz;
eine elektrische Schaltung (150) mit
(i) einem ersten Leistungseingang (11, 12, 13) zum Empfangen von Leistung aus einem Versorgungsnetz (170) über einen ersten Strompfad (SP1),
(ii) einem zweiten Leistungseingang (21, 22, 23) zum Empfangen von Leistung aus dem Versorgungsnetz (170) über einen zweiten Strompfad (SP2),
(iii) einem Leistungsausgang (31, 32, 33) zum Ausgeben von Leistung, die über den ersten Strompfad (SP1) und/oder den zweiten Strompfad (SP2) empfangen wird, an einen Leistungseingang (51, 52, 53) des Frequenzumrichters (130) und
(iv) einen Drehzahl-Steuerausgang (41, 42) zum Ausgeben eines Drehzahl-Steuersignals an einen Steuereingang (71, 72) des Frequenzumrichters (130);
wobei
die elektrische Schaltung (130) konfiguriert ist,
- bei einem Empfang von Leistung über den ersten Strompfad (SP1) ein erstes Drehzahl-Steuersignal auszugeben, welches den Frequenzumrichter (130) dazu veranlasst, den Synchronmotor (110) mit einer ersten Drehzahl zu betreiben,
und
- bei einem Empfang von Leistung über den zweiten Strompfad (SP2) ein zweites Drehzahl-Steuersignal auszugeben, welches den Frequenzumrichter (130) dazu veranlasst, den Synchronmotor (110) mit einer zweiten Drehzahl zu betreiben, die unterschiedlich ist zu der ersten Drehzahl.

2. Antriebseinheit (100) gemäß dem vorangehenden Anspruch, wobei
das erste Drehzahl-Steuersignal oder das zweite Drehzahl-Steuersignal ein Nullsignal ist.

3. Antriebseinheit (100) gemäß einem der vorangehenden Ansprüche, wobei
die elektrische Schaltung (150) derart konfiguriert ist, dass
A) lediglich einer der beiden Strompfade (SP1, SP2) auf eine Übertragung von Leistung überwacht wird
oder
B) beide Strompfade (SP1, SP2) jeweils auf eine Übertragung von Leistung überwacht werden.

4. Antriebseinheit (100) gemäß einem der vorangehenden Ansprüche, wobei
der Synchronmotor (110) eine Dreiphasen Drehstrommotor ist und
jeder der beiden Strompfade (SP1, SP2) drei Leitungen (L1, L2, L3) für jeweils eine Phase eines dreiphasigen Drehstroms aufweist;
wobei insbesondere
die elektrische Schaltung (150) konfiguriert ist, für den ersten Strompfad (SP1) und/oder für den zweiten Strompfad (SP2) einen Fluss von Leistung
(a) durch lediglich eine einzige Leitung oder
(b) durch genau zwei Leitungen oder
(c) durch alle drei Leitungen zu detektieren.

5. Antriebseinheit gemäß einem der vorangehenden Ansprüche, wobei die elektrische Schaltung in den Frequenzumrichter integriert ist.

6. Antriebseinheit (100) gemäß einem der vorangehenden Ansprüche, wobei der Frequenzumrichter (130) konfiguriert ist, eine Änderung der Drehzahl von der ersten Drehzahl zu der zweiten Drehzahl mit einer reduzierten Drehzahl-Änderungsgeschwindigkeit zu veranlassen, wobei die reduzierte Drehzahl-Änderungsgeschwindigkeit um einen Faktor GF geringer ist als eine maximal mögliche Drehzahl-Änderungsgeschwindigkeit des Synchronmotors (110), wobei der Faktor GF größer als 1,5, bevorzugt größer als 3 und weiter bevorzugt größer als 6 ist.

7. Antriebseinheit (100) gemäß einem der vorangehenden Ansprüche 1 bis 6, wobei die elektrische Schaltung (250) aufweist
eine Strom-Sensoreinrichtung (252), welche konfiguriert ist,
(i) einen Stromfluss über den ersten Strompfad (SP1) und/oder über den zweiten Strompfad (SP2) zu detektieren und
(ii) das erste Drehzahl-Steuersignal und das zweite Drehzahl-Steuersignal zu generieren;
wobei insbesondere
die elektrische Schaltung (250) aufweist
ein elektronisches Bauelement (254) zur Signalglättung, welches geschaltet ist
(a) zwischen einem Signalpfad der Strom-Sensoreinrichtung (252) und/oder einem Signalpfad einer der Strom-Sensoreinrichtung (252) nachgeschalteten Auswerteelektronik (255) der elektrischen Schaltung (252) und
(b) einem vorgegebenen elektrischen Bezugspotential und/oder einem anderen Signalpfad der Strom-Sensoreinrichtung (252);
wobei weiter insbesondere
das Bauelement zur Signalglättung ein ohmscher Widerstand (254) ist, wobei der ohmsche Widerstand (254) bevorzugt einen Widerstandwert im Bereich von 50 Ohm bis 100.000 Ohm hat und weiter bevorzugt einen Widerstandwert im Bereich von 2.000 Ohm bis 50.000 Ohm hat.

8. Antriebseinheit (100) gemäß einem der vorangehenden Ansprüche 1 bis 6, wobei die elektrische Schaltung (350) aufweist
eine Spannung-Sensoreinrichtung (360), welche konfiguriert ist,
(i) eine an dem ersten Strompfad (SP1) und/oder an dem über den zweiten Strompfad (SP2) anliegende Spannung zu detektieren und
(ii) das erste Drehzahl-Steuersignal und das zweite Drehzahl-Steuersignal zu generieren.

9. Antriebseinheit (100) gemäß dem vorangehenden Anspruch 8, wobei die Spannung-Sensoreinrichtung (360) aufweist
eine erste steuerbare Schaltereinrichtung (SE1), welche zwischen dem ersten Leistungseingang (11, 12, 13) und dem Leistungsausgang (31, 32, 33) geschaltet ist und welche bei einer Leistungsversorgung über den ersten Strompfad (SP1) geschlossen und bei einer Leistungsversorgung über den zweiten Strompfad (SP2) geöffnet ist, und
eine zweite steuerbare Schaltereinrichtung (SE2), welche zwischen dem zweiten Leistungseingang (21, 22, 23) und dem Leistungsausgang (31, 32, 33) geschaltet ist und welche bei einer Leistungsversorgung über den zweiten Strompfad (SP2) geschlossen und bei einer Leistungsversorgung über den ersten Strompfad (SP1) geöffnet ist, wobei
der Drehzahl-Steuerausgang (41, 42) sowohl mit der ersten steuerbaren Schaltereinrichtung (SE1) als auch mit der zweiten steuerbaren Schaltereinrichtung (SE2) elektrisch verbunden ist.

10. Antriebseinheit (100) gemäß dem vorangehenden Anspruch 9, wobei die erste steuerbare Schaltereinrichtung aufweist ein erstes Relais (SE1) mit einem ersten magnetischen Aktuator (A1), mit jeweils einem ersten Schalter (S11, S12, S13) für jeweils eine elektrische Phase (L1, L2, L3) des ersten Strompfads (SP1) und einem zusätzlichen ersten Hilfsschalter (HS1) und die zweite steuerbare Schaltereinrichtung aufweist ein zweites Relais (SE2) mit einem zweiten magnetischen Aktuator (A2), mit jeweils einem zweiten Schalter (S21, S22, S23) für eine elektrische Phase (L1, L2, L3) des zweiten Strompfads (SP2) und einem zusätzlichen zweiten Hilfsschalter (HS2).

11. Antriebseinheit (100) gemäß dem vorangehenden Anspruch 10, wobei die beiden Relais (SE1, SE2) derart konfiguriert sind, dass
(i) bei einer Leistungsversorgung über den ersten Strompfad (SP1) die ersten Schalter (S11, S12, S13) geschossen sind, der erste Hilfsschalter (HS1) geöffnet ist, die zweiten Schalter (S21, S22, S23) geöffnet sind und der zweite Hilfsschalter (HS2) geschlossen ist und
(ii) bei einer Leistungsversorgung über den zweiten Strompfad (SP2) die ersten Schalter (S11, S12, S13) geöffnet sind, der erste Hilfsschalter (HS1) geschlossen ist, die zweiten Schalter (S21, S22, S23) geschlossen sind und der zweite Hilfsschalter (HS2) geöffnet ist;
wobei insbesondere
die beiden steuerbaren Schaltereinrichtungen (SE1, SE2) derart miteinander verschaltet sind, dass
(i) bei einer Leistungsversorgung über den ersten Strompfad (SP1) ein Stromfluss von einer elektrischen Phase (L1) des ersten Strompfads (SP1) über den zweiten Hilfsschalter (HS2) und über den ersten magnetischen Aktuator (A1) zu einer anderen elektrischen Phase (L2) des ersten Strompfads (SP1) erfolgt und
(ii) bei einer Leistungsversorgung über den zweiten Strompfad (SP2) ein Stromfluss von einer elektrischen Phase (L1) des zweiten Strompfads (SP2) über den ersten Hilfsschalter (HS1) und über den zweiten magnetischen Aktuator (A2) zu einer anderen elektrischen Phase (L2) des zweiten Strompfads (SP2) erfolgt.

12. Antriebseinheit (100) gemäß einem der vorangehenden Ansprüche, wobei
A) die elektrische Schaltung (250) ferner konfiguriert ist, bei einem Empfang von Leistung sowohl über den ersten Strompfad (SP1) aus auch über den zweiten Strompfad (SP2) ein drittes Drehzahl-Steuersignal auszugeben, welches den Frequenzumrichter (130) dazu veranlasst, den Synchronmotor (110) mit einer dritten Drehzahl zu betreiben, wobei die dritte Drehzahl unterschiedlich ist sowohl zu der ersten Drehzahl als auch zu der zweiten Drehzahl;
oder wobei
B) die elektrische Schaltung ferner aufweist
einen dritten Leistungseingang zum Empfangen von elektrischer Leistung aus dem Versorgungsnetz über einen dritten Strompfad und wobei die elektrische Schaltung ferner konfiguriert ist,
bei einem Empfang von elektrischer Leistung über den dritten Strompfad ein drittes Drehzahl-Steuersignal auszugeben, welches den Frequenzumrichter dazu veranlasst, den Synchronmotor mit einer dritten Drehzahl zu betreiben, welche unterschiedlich ist sowohl zu der ersten Drehzahl als auch zu der zweiten Drehzahl.

13. Stationäre Lüftungsanlage für ein Gebäude, die stationäre Lüftungsanlage aufweisend
einen Lüfter (190) zum Fördern von einem gasförmigen Medium, insbesondere Luft;
ein lüfterseitiges Antriebsrad (192);
eine Antriebseinheit (100) gemäß einem der vorangehenden Ansprüche 1 bis 12; und
das mechanische Koppelelement (180), welches das motorseitige Antriebsrad (120) mit dem lüfterseitigen Antriebsrad (192) koppelt;
wobei insbesondere
A) das motorseitige Antriebsrad (120) einen kleineren Durchmesser aufweist als das lüfterseitige Antriebsrad (192):
und/oder
B) das mechanisches Koppelelement ein Riemen (180) ist;
wobei weiter insbesondere
im Betrieb die Spannkraft des Riemens (180) weniger als 80%, bevorzugt weniger als 70% und weiter bevorzugt weniger als 60% als die für den Riemen (180) zulässige maximale Spannkraft ist.

14. Stationäre Lüftungsanlage gemäß Anspruch 13, wobei
der Frequenzumformer (130) in Bezug zu dem Lüfter (190) derart angeordnet ist, dass der Frequenzumformer (130) von einem von dem Lüfter (190) erzeugten Luftstrom umströmt ist.

15. Verfahren zum Modernisieren einer stationären Lüftungsanlage für ein Gebäude, wobei die Lüftungsanlage zumindest einen Lüfter (190) aufweist, das Verfahren aufweisend
Ausbauen einer Antriebsvorrichtung für den Lüfter (190); und
Einbauen einer Antriebseinheit (100) gemäß einem der vorangehenden Ansprüche 1 bis 12;
wobei insbesondere
A) die Antriebsvorrichtung frei von einem Frequenzumrichter ist;
und/oder
B) das motorseitige Antriebsrad (120) der Antriebseinheit (100) einen Durchmesser aufweist, der kleiner ist als ein Durchmesser eines motorseitigen Antriebsrades der Antriebsvorrichtung.
